(19) Europäisches Patentamt / European Patent Office / Office européen des brevets

(11) **EP 4 362 469 A1**

(12) **EUROPEAN PATENT APPLICATION**
published in accordance with Art. 153(4) EPC

(43) Date of publication:
**01.05.2024 Bulletin 2024/18**

(21) Application number: **22841144.3**

(22) Date of filing: **22.06.2022**

(51) International Patent Classification (IPC):
***H04N 19/85*** *(2014.01)*

(52) Cooperative Patent Classification (CPC):
**H04N 19/426; H04N 19/85**

(86) International application number:
**PCT/CN2022/100496**

(87) International publication number:
**WO 2023/284504 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.07.2021 CN 202110786721**

(71) Applicant: **Huawei Technologies Co., Ltd.
Shenzhen, Guangdong 518129 (CN)**

(72) Inventors:
• **MA, Xiang
  Shenzhen, Guangdong 518129 (CN)**
• **YANG, Haitao
  Shenzhen, Guangdong 518129 (CN)**
• **DENG, Yizhi
  Shenzhen, Guangdong 518129 (CN)**

(74) Representative: **Gill Jennings & Every LLP
The Broadgate Tower
20 Primrose Street
London EC2A 2ES (GB)**

(54) **DATA PROCESSING METHOD, SYSTEM AND ELECTRONIC APPARATUS**

(57) Embodiments of this application provide a data processing method and system, and an electronic device. The method includes: Before an encoder encodes an image rendered by a graphics processing unit, the graphics processing unit obtains rendering information related to rendered image, compresses the rendering information, and transmits compressed rendering information. Then the encoder may perform encoding optimization based on the compressed rendering information in a process of encoding the rendered image. In this way, a data amount of the rendering information can be reduced, and a transmission delay of the rendering information can be reduced. In addition, the encoder performs encoding after receiving the rendering information. Therefore, in this embodiment of this application, duration of waiting for encoding by the encoder can be reduced, thereby reducing a transmission delay in an entire cloud rendering process.

FIG. 6

**Description**

This application claims priority to Chinese Patent Application No. 202110786721.X, filed with the China National Intellectual Property Administration on July 12, 2021 and entitled "DATA PROCESSING METHOD AND SYSTEM, AND ELECTRONIC DEVICE", which is incorporated herein by reference in its entirety.

**TECHNICAL FIELD**

Embodiments of this application relate to the data processing field, and in particular, to a data processing method and system, and an electronic device.

**BACKGROUND**

Currently, games, animations, and movie/television special effects are obtained through rendering (Rendering). Because computing complexity of rendering is relatively high, rendering has a very high requirement on a computing capability of a device. In this case, cloud rendering is proposed, that is, a rendering operation is performed on a server, to reduce a requirement on a computing capability of a client.

However, cloud rendering has a relatively high requirement on a data transmission bandwidth and a transmission delay. Therefore, how to reduce the data transmission bandwidth requirement or the transmission delay becomes an urgent problem to be resolved.

**SUMMARY**

To resolve the foregoing technical problem, this application provides a data processing method and system, and an electronic device. In the method, rendering information is compressed and then transmitted, and/or the rendering information is transmitted in blocks, thereby reducing a data transmission bandwidth requirement and a transmission delay.

According to a first aspect, an embodiment of this application provides a data processing method, including: before an encoder encodes an image rendered by a graphics processing unit, the graphics processing unit obtains rendering information related to rendered image, compresses the rendering information, and transmits compressed rendering information. Then the encoder may perform encoding optimization based on the compressed rendering information in a process of encoding the rendered image. In this way, a data amount of the rendering information can be reduced, and a transmission delay of the rendering information can be reduced. In addition, the encoder performs encoding after receiving the rendering information. Therefore, in this embodiment of this application, duration of waiting for encoding by the encoder can be reduced, thereby reducing a transmission delay in an entire cloud rendering process. In addition, a decrease in the data amount of the rendering information may further reduce a requirement of the rendering information on a transmission bandwidth. In addition, buffer space that is in the encoder and that is used to store rendering information may also be reduced, so that a buffer of the encoder can be saved.

For example, the rendering information may include information used to assist execution of the rendering process.

For example, the rendering information may include information that is input to the rendering module, for example, depth (depth) information and material ID (Identity Document, identity document) information (hereinafter ID information for short).

For example, the rendering information may further include information generated by the rendering module in a rendering process, for example, RMV (Rendering Motion Vector, rendering motion vector) information.

According to the first aspect, the compressing the rendering information includes: reducing a resolution of the rendering information; and/or reducing a bit depth of the rendering information.

According to the first aspect or any implementation of the first aspect, the reducing a resolution of the rendering information includes: obtaining sampling ratio information, where the sampling ratio information includes horizontal sampling ratio information and vertical sampling ratio information; and performing downsampling on the rendering information in a horizontal dimension and a vertical dimension based on the horizontal sampling ratio information and the vertical sampling ratio information.

According to the first aspect or any implementation of the first aspect, the obtaining sampling ratio information includes: obtaining storage granularity information of the encoder for a motion vector, and determining the sampling ratio information based on the storage granularity information; or obtaining compensation granularity information required for motion compensation of a decoder, and determining the sampling ratio information based on the compensation granularity information.

According to the first aspect or any implementation of the first aspect, a value of a bit depth of the rendering information is a first bit depth value; and the reducing a bit depth of the rendering information includes: obtaining a second bit depth value, where the second bit depth value is less than the first bit depth value; and converting the bit depth of the rendering information from the first bit depth value to the second bit depth value.

According to the first aspect or any implementation of the first aspect, the obtaining a second bit depth value includes: obtaining a third bit depth value, where the third bit depth value is used to represent a bit depth of rendering information required for encoding optimization of the encoder; and determining the second bit depth value based on the first bit depth value and the third bit depth value.

According to the first aspect or any implementation of the first aspect, the transmitting the compressed rendering information includes: dividing the compressed rendering information into a plurality of information blocks; and transmitting the information blocks separately. In this way, when receiving any information block of the compressed rendering information, the encoder may encode a macroblock corresponding to the information block, so that transmission of the rendering information and encoding are performed synchronously, which can reduce duration for the encoder to wait for the rendering information, further reduce a transmission delay of the rendering information, and further reduce a requirement of the rendering information on a transmission bandwidth.

According to the first aspect or any implementation of the first aspect, the method further includes: dividing the rendering information into a plurality of information blocks; the compressing the rendering information includes: compressing the information blocks separately; and the transmitting the compressed rendering information includes: transmitting the compressed information blocks separately. In this way, when receiving any information block of the compressed rendering information, the encoder may encode a macroblock corresponding to the information block, so that transmission of the rendering information and encoding are performed synchronously, which can reduce duration for the encoder to wait for the rendering information, further reduce a transmission delay of the rendering information, and further reduce a requirement of the rendering information on a transmission bandwidth.

According to the first aspect or any implementation of the first aspect, the dividing the compressed rendering information into a plurality of information blocks includes: dividing the compressed rendering information into blocks according to a preset block division manner, to obtain the plurality of information blocks, where the block division manner is a manner in which the encoder divides the rendered image into a plurality of macroblocks.

According to the first aspect or any implementation of the first aspect, the transmitting the information blocks separately includes: determining a transmission sequence of the information blocks according to a preset encoding sequence, where the encoding sequence is an encoding sequence set by the encoder for the plurality of macroblocks; and sequentially transmitting the information blocks according to the transmission sequence corresponding to the information blocks.

According to the first aspect or any implementation of the first aspect, the transmitting the compressed rendering information includes: transmitting the compressed rendering information to the encoder; or transmitting the compressed rendering information to an analysis module, so that the analysis module performs analysis based on the compressed rendering information, determines encoding optimization information, and transmits the encoding optimization information to the encoder, and the encoder performs encoding optimization based on the encoding optimization information in a process of encoding the rendered image.

According to a second aspect, an embodiment of this application provides a data processing method, including: before an encoder encodes an image rendered by a graphics processing unit, obtaining, by the graphics processing unit, rendering information related to a rendered image; and dividing the rendering information into a plurality of information blocks, and transmitting the information blocks separately. In this way, when receiving any information block of the rendering information, the encoder may encode a macroblock corresponding to the information block, so that transmission of the rendering information and encoding are performed synchronously, which can reduce duration for the encoder to wait for the rendering information, and reduce a transmission delay of the rendering information. In addition, a data amount of the information block is less than a data amount of complete rendering information. Therefore, in this embodiment of this application, a requirement of the rendering information on a transmission bandwidth can also be reduced.

According to the second aspect, the dividing the rendering information into a plurality of information blocks includes: dividing the rendering information into blocks according to a preset block division manner, to obtain the plurality of information blocks, where the block division manner is a manner in which the encoder divides the rendered image into a plurality of macroblocks.

According to the second aspect or any implementation of the second aspect, the transmitting the information blocks separately includes: determining a transmission sequence of the information blocks according to a preset encoding sequence, where the encoding sequence is an encoding sequence set by the encoder for the plurality of macroblocks; and sequentially transmitting the information blocks according to the transmission sequence corresponding to the information blocks.

For example, after completing encoding optimization by using one information block, the encoder may release a buffer corresponding to the information block, to save buffer space of the encoder.

According to the second aspect or any implementation of the second aspect, the transmitting the information blocks separately includes: transmitting the information blocks to the encoder separately; or transmitting the information blocks to an analysis module separately, so that the analysis module analyzes the information blocks, determines encoding optimization information corresponding to each of the information blocks separately, and transmits the encoding optimization information to the encoder, and the encoder performs encoding optimization based on encoding optimization information of a corresponding information block in a process of encoding the macroblocks.

According to a third aspect, an embodiment of this application provides a graphics processing unit, configured to perform the data processing method according to the first aspect or any implementation of the first aspect or the second aspect or any implementation of the second aspect.

The third aspect and any implementation of the third aspect respectively correspond to the first aspect, any implementation of the first aspect, the second aspect, or any implementation of the second aspect. For technical effects corresponding to the third aspect or any implementation of the third aspect, refer to technical effects corresponding to the first aspect, any implementation of the first aspect, the second aspect, or any implementation of the second aspect. Details are not described herein again.

According to a fourth aspect, an embodiment of this application provides a data processing system, including a graphics processing unit and an encoder, where the graphics processing unit is configured to: render an image, and obtain rendering information related to a rendered image; and transmit the rendered image to the encoder, compress the rendering information, and transmit compressed rendering information to the encoder; and the encoder is configured to: encode the rendered image, and perform encoding optimization based on the compressed rendering information in an encoding process.

The fourth aspect and any implementation of the fourth aspect respectively correspond to the first aspect and any implementation of the first aspect. For technical effects corresponding to the fourth aspect and any implementation of the fourth aspect, refer to the technical effects corresponding to the first aspect and any implementation of the first aspect. Details are not described herein again.

According to a fifth aspect, an embodiment of this application provides a data processing system, including: a graphics processing unit and an encoder, where the graphics processing unit is configured to: render an image, obtain rendering information related to the rendered image, transmit the rendered image to the encoder, divide the rendering information into a plurality of information blocks, and transmit the information blocks to the encoder separately; and the encoder is configured to: divide the rendered image into a plurality of macroblocks, encode, after receiving an information block, a macroblock corresponding to the received information block, and perform encoding optimization based on the received information block in a process of encoding the macroblock.

The fifth aspect and any implementation of the fifth aspect respectively correspond to the second aspect and any implementation of the second aspect. For technical effects corresponding to the fifth aspect and any implementation of the fifth aspect, refer to the technical effects corresponding to the second aspect and any implementation of the second aspect. Details are not described herein again.

According to a sixth aspect, an embodiment of this application provides a data processing system, including a graphics processing unit, an analysis module, and an encoder, where the graphics processing unit is configured to: render an image, and obtain rendering information related to a rendered image; and transmit the rendered image to the encoder, compress the rendering information, and transmit compressed rendering information to the analysis module; the analysis module is configured to: perform analysis based on the compressed rendering information, determine encoding optimization information, and transmit the encoding optimization information to the encoder; and the encoder is configured to: encode the rendered image, and perform encoding optimization based on the encoding optimization information in an encoding process.

The sixth aspect and any implementation of the sixth aspect respectively correspond to the first aspect and any implementation of the first aspect. For technical effects corresponding to the sixth aspect and any implementation of the sixth aspect, refer to the technical effects corresponding to the first aspect and any implementation of the first aspect. Details are not described herein again.

According to a seventh aspect, an embodiment of this application provides a data processing system, including a graphics processing unit, an analysis module, and an encoder, where the graphics processing unit is configured to: render an image, obtain rendering information related to the rendered image, transmit the rendered image to the encoder, divide the rendering information into a plurality of information blocks, and transmit the information blocks to the analysis module separately; the analysis module is configured to: analyze the information blocks, determine encoding optimization information corresponding to each of the information blocks separately, and transmit the encoding optimization information corresponding to each of the information blocks to the encoder; and the encoder is configured to: divide the rendered image into a plurality of macroblocks, encode, after receiving an information block, a macroblock corresponding to the received information block, and perform encoding optimization based on encoding optimization information of the received information block in a process of encoding the macroblock.

The seventh aspect and any implementation of the seventh aspect respectively correspond to the second aspect and any implementation of the second aspect. For technical effects corresponding to the seventh aspect and any implementation of the seventh aspect, refer to technical effects corresponding to the second aspect or any implementation of the second aspect. Details are not described herein again.

According to an eighth aspect, an embodiment of this application provides an electronic device, including a memory and a processor. The memory is coupled to the processor. The memory stores a program instruction, and when the program instruction is executed by the processor, the electronic device is enabled to perform the data processing method according to the first aspect, any implementation of the first aspect, the second aspect, or any implementation of the second aspect.

The eighth aspect and any implementation of the eighth aspect respectively correspond to the first aspect, any implementation of the first aspect, the second aspect, or any implementation of the second aspect. For technical effects corresponding to the eighth aspect and any implementation of the eighth aspect, refer to technical effects corresponding to the first aspect, any implementation of the first aspect, the second aspect, or any implementation of the second aspect. Details are not described herein again.

According to a ninth aspect, an embodiment of this application provides a computer storage medium, where the computer storage medium stores a computer program, and when the computer program runs on a computer or a processor, the computer or the processor is enabled to perform the data processing method according to the first aspect, any implementation of the first aspect, the second aspect, or any implementation of the second aspect.

The ninth aspect and any implementation of the ninth aspect respectively correspond to the first aspect, any implementation of the first aspect, the second aspect, or any implementation of the second aspect. For technical effects corresponding to the ninth aspect and any implementation of the ninth aspect, refer to technical effects corresponding to the first aspect, any implementation of the first aspect, the second aspect, or any implementation of the second aspect. Details are not described herein again.

## BRIEF DESCRIPTION OF DRAWINGS

FIG. 1 is a schematic diagram of an example of an application scenario;
FIG. 2 is a schematic diagram of an example of an image block division process;
FIG. 3 is a schematic diagram of an example of data transmission;
FIG. 4 is a schematic diagram of an example of data transmission;
FIG. 5 is a schematic diagram of an example of a data processing procedure;
FIG. 6 is a schematic diagram of an example of a data transmission process;
FIG. 7 is a schematic diagram of an example of data processing;
FIG. 8 is a schematic diagram of an example of a data transmission process;
FIG. 9 is a schematic diagram of an example of a data processing procedure;
FIG. 10 is a schematic diagram of an example of block division;
FIG. 11 is a schematic diagram of an example of an information block transmission process;
FIG. 12 is a schematic diagram of an example of transmission and encoding;
FIG. 13 is a schematic diagram of an example of transmission and encoding;
FIG. 14 is a schematic diagram of an example of a data processing procedure;
FIG. 15 is a schematic diagram of an example of a data transmission process;
FIG. 16 is a schematic diagram of an example of a data processing procedure;
FIG. 17 is a schematic diagram of an example of a data transmission process;
FIG. 18 is a schematic diagram of an example of a data processing procedure;
FIG. 19 is a schematic diagram of an example of a data transmission process;
FIG. 20 is a schematic diagram of an example of a data transmission process;
FIG. 21 is a schematic diagram of an example of a data processing procedure;
FIG. 22 is a schematic diagram of an example of a data transmission process;
FIG. 23 is a schematic diagram of an example of a data transmission process; and
FIG. 24 is a schematic diagram of an example of a structure of an apparatus.

## DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on the embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not describe a particular order of the objects. For example, a first target object and a second target object are used to distinguish between different target objects, but are not used to describe a particular order of the target objects.

In embodiments of this application, the word "example", "for example", or the like represents giving an example, an illustration, or a description. Any embodiment or design described by "example" or "for example" in embodiments of this application should not be construed as being more preferred or advantageous than another embodiment or design. To be precise, the words such as "example" or "for example" are intended to present a relative concept in a specific manner.

In the description of embodiments of this application, unless otherwise stated, "plurality of" means two or more than two. For example, a plurality of processing units means two or more processing units; and a plurality of systems mean two or more systems.

Embodiments of this application may be applied to a scenario in which cloud rendering needs to be performed, such as an AR (Augmented Reality, augmented Reality) scenario, a VR (Virtual Reality, virtual reality) scenario, a cloud exhibition scenario, a cloud class scenario, a cloud Karaoke scenario, a cloud concert scenario, a cloud game scenario, and a content production scenario (including film special effect production and television special effect production). This is not limited in the embodiments of this application. In this embodiment of this application, a cloud game scenario is used as an example for description.

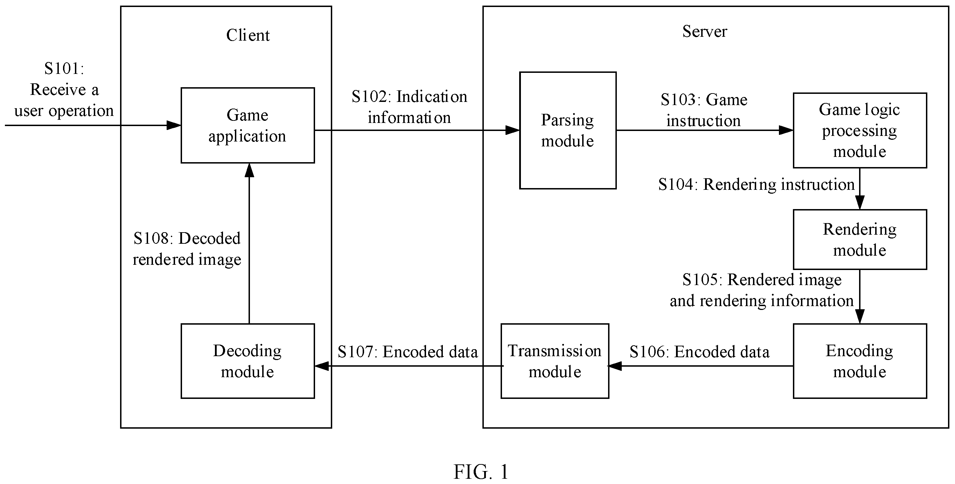

FIG. 1 is a schematic diagram of an example of an application scenario. Refer to FIG. 1. An application scenario in FIG. 1 is a cloud game scenario.

The cloud game scenario in FIG. 1 includes a client and a server.

For example, a game application and a decoding module are deployed on the client. For example, the game application may provide a human-computer interaction interface for a user to perform a game operation. For example, the decoding module may be configured to decode data (for example, an image/a video), and may be a decoder (for example, a video decoder).

It should be understood that the client has more modules or programs than those shown in FIG. 1. This is not limited in this embodiment of this application.

For example, the server is deployed with a parsing module, a game logic processing module, a rendering module, an encoding module, and a transmission module.

For example, the parsing module may be configured to parse indication information.

For example, the game logic processing module may be configured to determine whether rendering is required.

For example, the rendering module may be configured to perform a rendering operation.

For example, the encoding module may be configured to encode data (for example, an image/a video), and may be an encoder (for example, a video encoder).

For example, the transmission module may be configured to transmit encoded data (for example, a compressed image/video data).

For example, the parsing module, the game logic processing module, the encoding module, and the transmission module may be deployed in a CPU (Central Processing Unit, central processing unit). The rendering module may be a graphics processing unit, or may be deployed in a graphics processing unit. For example, the graphics processing unit is a microprocessor that specializes in image and graphics-related operations on a personal computer, a workstation, a game console, and some mobile devices (such as a tablet computer and a smartphone). The graphics processing unit may include a GPU (Graphics Processing Unit, graphics processing unit).

For example, the parsing module, the game logic processing module, and the transmission module may be deployed in a CPU, and the rendering module and the encoding module may be deployed in a GPU.

It should be understood that the server has more modules than those shown in FIG. 1. This is not limited in this embodiment of this application.

Still refer to FIG. 1. A rendering process of the cloud game may be as follows.

S101: A game application receives a user operation.

For example, a user may open a game application in a client as required, and perform various operations in the game application to play a game. In this way, the game application may receive a user operation.

S102: The game application sends indication information to the parsing module.

For example, after receiving the user operation, the game application may generate indication information in response to the user operation based on information related to the user operation, and send the indication information to the parsing module of the server.

S103: The parsing module sends a game instruction to the game logic processing module.

For example, after receiving the indication information, the parsing module may parse the indication information to obtain a game instruction. Then the parsing module sends the game instruction to the game logic processing module.

S104: The game logic processing module sends a rendering instruction to the rendering module.

For example, after receiving the game instruction, the game logic processing module may determine, based on the game instruction, whether rendering is required. If it is determined that rendering is required, a rendering instruction may be generated and sent to the rendering module.

S105: The rendering module sends a rendered image and rendering information to the encoding module.

For example, after receiving the rendering instruction, the rendering module may load, based on the rendering instruction, data required for rendering. For example, the data required for rendering may include model data of a three-dimensional model corresponding to the rendering instruction. The model data of the three-dimensional model includes but is not limited to vertex coordinates, texture coordinates, texture mapping, and the like. This is not limited in this embodiment of this application.

For example, after loading the data required for rendering, the rendering module may perform rendering based on the data required for rendering, to obtain an image of a current game scenario, that is, the rendered image.

For example, the rendering module may send the rendered image to the encoding module, and the encoding module encodes the rendered image and then transmits the encoded image to the client.

For example, the rendering module may further send the rendering information to the encoding module, so that the encoding module performs encoding optimization based on the rendering information, thereby improving encoding efficiency.

For example, the rendering information may include information used to assist execution of the rendering process. For example, the rendering information may include information that is input to the rendering module, for example, depth (depth) information and material ID (Identity Document, identity document) information (hereinafter ID information for short). For example, the rendering information may further include information generated by the rendering module in a rendering process, for example, RMV (Rendering Motion Vector, rendering motion vector) information.

For example, the ID information includes pixel information of each pixel obtained after each vertex of an object in the three-dimensional model is mapped from 3D (3 Dimensions, 3 dimensions) space to a pixel on a screen.

For example, a bit depth of the ID information is K1 bit (K1 is a positive integer, for example, 8), and a bit depth of information may be a quantity of bits corresponding to a value of the information. The ID information may include three channels (channels), data in the three channels is valid data, and a value of each channel may be represented by K1 bit. For example, the ID information may be represented by three channels: RGB (R (Red, red) G (Green, green) B (Blue, blue)), and ID values from one object or one material are the same (three values of RGB are respectively the same).

For example, the depth information includes a depth value of each pixel obtained after each vertex of an object in the three-dimensional model is mapped from 3D space to a pixel on a screen.

For example, a bit depth of the depth information is K2 bit (K2 is a positive integer, for example, 8), and may include three channels. Data of one channel in the three channels is valid data, and a value of each channel may be represented by K2 bit.

For example, the RMV information may include a location difference between pixels that are on the screen and that are obtained after each vertex of a three-dimensional model on which a depth test is performed is separately mapped to an $m^{th}$ (m is a positive integer) frame and an $(m+1)^{th}$ frame.

For example, a bit depth of the RMV information is K3 bit (K3 is a positive integer, for example, 32), and may include three channels. Data of two channels in the three channels is valid data, and a value of each channel may be represented by a floating point number of K3 bit.

For example, the rendering information and the rendered image have a same resolution. For example, if a resolution of the rendered image is W×H, a resolution of the rendering information may be W×H. W represents a horizontal pixel, and H represents a vertical pixel.

It should be noted that the rendering information in this embodiment of this application has more information than that shown above, for example, a camera parameter (including but not limited to a focal length, an aperture, an intrinsic parameter and an extrinsic parameter of a camera, and an exposure). This is not limited in this embodiment of this application.

For example, the rendering module may transmit some rendering information to the encoding module. For example, the rendering module transmits one of the ID information, the depth information, and the RMV information to the encoding module. For another example, the rendering module transmits two of the ID information, the depth information, and the RMV information to the encoding module. For still another example, the rendering module transmits all the ID information, the depth information, and the RMV information to the encoding module. For example, the rendering module may alternatively transmit all the rendering information to the encoding module. This is not limited in this embodiment of this application.

S106: The encoding module sends the encoded data to the transmission module.

After receiving the rendered image and the rendering information, the encoding module may encode the rendered image, and perform encoding optimization based on the rendering information in an encoding process. After the rendered image is encoded to obtain corresponding encoded data, the encoded data may be sent to the transmission module.

For example, before rendering the rendered image, the encoding module may first divide the rendered image into a plurality of macroblocks, then divide each macroblock into a plurality of code blocks, and then perform encoding in a unit of code blocks.

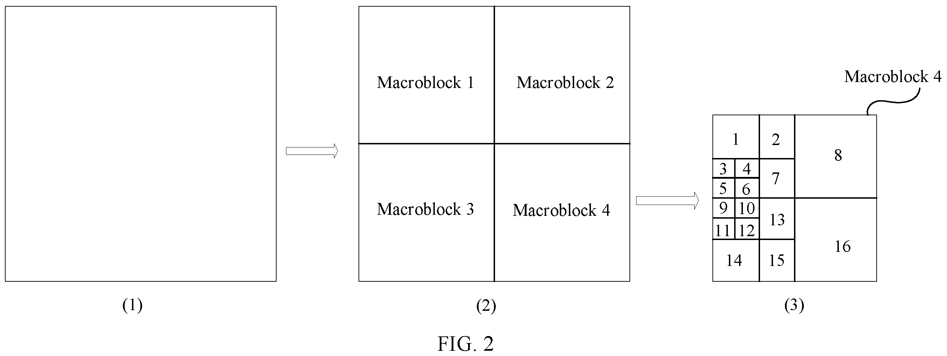

FIG. 2 is a schematic diagram of an example of an image block division process.

(1) in FIG. 2 shows a frame of rendered image, where a resolution of the rendered image is 64×64. Then, the rendered image of the frame is divided, and the rendered image is divided into a plurality of macroblocks. As shown in (2) in FIG. 2, the rendered image may be divided into 4 macroblocks: a macroblock 1, a macroblock 2, a macroblock 3, and a macroblock 4. Resolutions of the macroblock 1, the macroblock 2, the macroblock 3, and the macroblock 4 are all 32×32. Then, each macroblock is divided into a plurality of code blocks. As shown in (3) in FIG. 2, the macroblock 4 may be divided into 16 code blocks. Resolutions of code blocks 8 and 16 are 16×16, resolutions of code blocks 1, 2, 7, 13, 14, and 15 are 8×8, and resolutions of code blocks 3, 4, 5, 6, 9, 10, 11, and 12 are 4×4.

It should be noted that (3) FIG. 2 shows merely an example of dividing the macroblock into a plurality of code blocks. The macroblock 4 may be further divided into code blocks of a smaller granularity, for example, 2×2 code blocks. This is not limited in this embodiment of this application.

It should be further noted that the macroblock 1, the macroblock 2, and the macroblock 3 may be divided into code blocks in a same manner as the macroblock 4, or may be divided into code blocks in a manner different from the manner of the macroblock 4. This is not limited in this embodiment of this application.

For example, an encoding process of the encoding module is as follows: For each code block, a pixel value of a pixel in a reconstructed region in a current frame may be used to predict (that is, intra predict) a pixel value of a pixel in a current code block. Alternatively, in a reconstructed image frame, a matched reference code block is found for a current code block in a current frame, and a pixel value of a pixel in the reference code block is used as prediction information of the pixel value of the pixel in the current code block (this process may be referred to as motion estimation (Motion estimation, ME)). In addition, a motion vector (Motion Vector, MV) pointing to the reference code block, indication information of an image frame in which the reference code block is located, and the like (that is, inter prediction) are determined. After the prediction information is obtained through intra or inter prediction, the corresponding prediction information may be subtracted from the pixel value of the pixel in the current code block, to obtain residual information. Then, the residual information is transformed by using a method such as discrete cosine transformation (Discrete Cosine Transformation, DCT), and quantization entropy encoding is used to complete encoding of a code block, to obtain encoded data of the code block.

For example, the encoding module may perform encoding optimization based on the rendering information in a plurality of manners. For example, the encoding module uses RMV information corresponding to the current code block as a search start point of an MV or motion estimation corresponding to the current code block, to accelerate a motion estimation process. For another example, the encoding module may determine a texture direction based on ID information, depth information, or RMV information, to determine a division mode of the code block (for example, if depth information (or ID information or RMV information) corresponding to pixels in the current code block is the same or similar (for example, a transformation range of the depth information (or ID information or RMV information) is less than a preset threshold), it is considered that the pixels are corresponding to one object, and in this case, it is considered that the current code block may not be further divided, to save encoding time).

S107: The transmission module sends the encoded data to the decoding module.

For example, the transmission module performs streaming (streaming) processing on the encoded data, and transmits streamed data.

For example, the transmission module may obtain the indication information from the parsing module, and parse the indication information to obtain a source address of the client.

For example, the transmission module may alternatively directly obtain a source address of the client from the parsing module.

Then, the transmission module may send the encoded data to a decoding module of a corresponding client based on the source address.

S108: The decoding module sends a decoded rendered image to a game application.

After receiving the encoded data, the decoding module may decode the encoded data to obtain the decoded rendered image, and then return the decoded rendered image to the game application.

It should be noted that, because the encoding module encodes (that is, compresses) the rendered image, image quality deteriorates. Therefore, there is a difference between the decoded rendered image that is sent by the decoding module to the game application and the rendered image that is sent by the rendering module to the encoding module.

For example, a decoding process of the decoding module may be as follows: The decoding module first obtains residual information through entropy decoding, dequantization, and inverse transformation, and then determines whether intra prediction encoding or inter prediction encoding is used for the current code block. If the intra prediction encoding is used, prediction information is constructed, by using pixel values of pixels in a surrounding reconstructed area, according to an intra prediction method used by the encoding module. If the inter prediction encoding is used, motion information MV needs to be obtained through parsing, a reference code block is determined in the reconstructed image by using the motion information MV obtained through parsing, and pixel values of pixels in a block are used as the prediction information (this process is referred to as motion compensation (Motion compensation, MC)). Reconstructed information can be obtained by performing a filtering operation on combined prediction information and residual information.

After receiving the decoded rendered image returned by the decoding module, the game application may display the decoded rendered image, to display a game scenario (an image or a video) corresponding to a user operation.

In FIG. 1, S105 involves a large amount of data transmission, and therefore, a process of S105 has a relatively high requirement on a transmission bandwidth or a transmission delay. Further, reduction of the transmission bandwidth requirement or the transmission delay may be considered. Therefore, in this embodiment of this application, the transmission bandwidth requirement and the transmission delay are reduced in S105.

In the conventional technology, the rendering module starts to encode the rendered image only after receiving rendering information of each frame of rendered image, and the rendering information is only used for encoding optimization. In addition, there are a plurality of types of rendering information, and some rendering information (for example, depth information, ID information, and RMV information) has a same resolution as the rendered image, that is, a data amount of the rendering information is multiple times of the rendered image. Therefore, in this embodiment of this application, it may be considered that the transmission bandwidth requirement and the transmission delay are reduced starting from the rendering information.

In a possible implementation, the rendering information may be compressed first to reduce the data amount of the rendering information, and then compressed rendering information is transmitted, so that a transmission delay of the rendering information can be reduced, and a requirement of the rendering information on the transmission bandwidth can also be reduced.

For example, in this embodiment of this application, an example in which the rendering module is a GPU, the encoding module is an encoder, and the decoding module is a decoder is used for description.

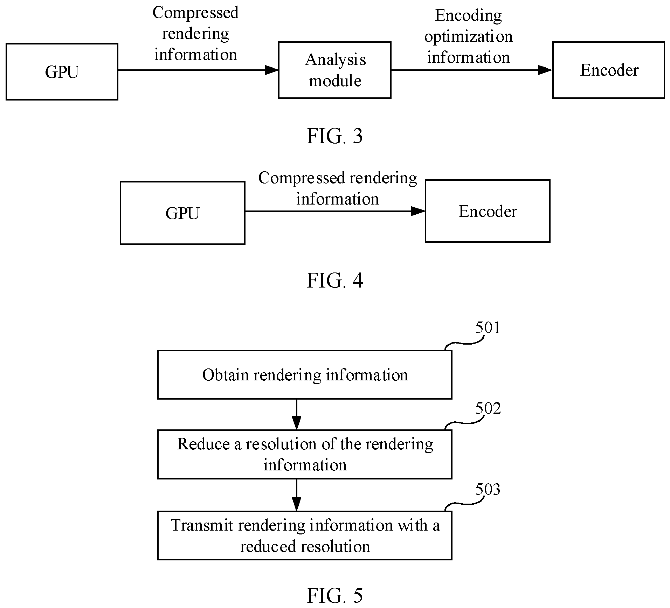

FIG. 3 is a schematic diagram of an example of data transmission.

Refer to FIG. 3. For example, a GPU transmits compressed rendering information to an analysis module. The analysis module performs analysis based on the compressed rendering information, and determines encoding optimization information required for the encoder to perform encoding optimization. Then, the analysis module sends the encoding optimization information to the encoder, and the encoder performs encoding optimization based on the encoding optimization information in a process of encoding a rendered image.

For example, the analysis module may be deployed in a GPU.

For example, the analysis module may be deployed in a CPU.

For example, the analysis module may be a single module.

For example, the analysis module may be a module group including a plurality of modules.

FIG. 4 is a schematic diagram of an example of data transmission.

Refer to FIG. 4. For example, a GPU transmits compressed rendering information to an encoder. To be specific, the GPU may directly transmit the compressed rendering information to the encoder without using any other module. In this embodiment of this application, an example in which the GPU transmits the compressed rendering information to the encoder is used for description.

Scenario 1

In a possible implementation, the rendering information may be compressed by reducing a resolution of the rendering information.

FIG. 5 is a schematic diagram of an example of a data processing procedure.

S501: Obtain rendering information.

For example, after performing a rendering operation to obtain a rendered image, a GPU may transmit the rendered image to an encoder on the one hand, and may obtain the rendering information on the other hand, and then compress the rendering information and transmit compressed rendering information to the encoder. Refer to the following S502 to S503.

S502: Reduce a resolution of the rendering information.

For example, spatial downsampling may be performed on the rendering information, to reduce the resolution of the rendering information.

For example, sampling ratio information may be preset, so that the GPU may perform spatial downsampling on the rendering information based on preset sampling ratio information.

For example, the sampling ratio information may be used to represent a reduction degree of the resolution of the rendering information.

For example, the sampling ratio information includes horizontal sampling ratio information and vertical sampling ratio information.

For example, the GPU may also set the sampling ratio information based on transmission efficiency of the rendering information and optimization efficiency of encoding optimization performed by the encoder based on the rendering information.

For example, for RMV information, in a process of performing encoding optimization based on the RMV information, the encoder may use the RMV information as an MV in a motion estimation process. Therefore, sampling ratio information of the RMV information may be set based on the MV

In a possible manner, the sampling ratio information of the RMV information may be set based on storage granularity information of the encoder for the MV For example, the storage granularity information of the MV may be a resolution of a corresponding block that needs the encoder to store an encoding MV in a motion estimation process. For example, if a storage granularity of the MV is $4\times4$, it indicates that one MV needs to be stored for each $4\times4$ block in a code block. For example, if a storage granularity of the MV is $2\times2$, it indicates that one MV needs to be stored for each $2\times2$ block in a code block. For example, the storage granularity information may include a horizontal pixel and a vertical pixel. For example, the horizontal sampling ratio information corresponding to the RMV information may be a ratio (for example, N1/A1) of a number that can be exactly divided by the horizontal pixel in the storage granularity information (other than the horizontal pixel in the storage granularity information, and may be represented by N1, where N1 is a positive integer) to the horizontal pixel (which may be represented by A1, where A1 is a positive integer) in the storage granularity information. The vertical sampling ratio information may be a ratio (for example, N2/A2) of a number that can be exactly divided by the vertical pixel in the storage granularity information (other than the vertical pixel in the storage granularity information, and may be represented by N2, where N2 is a positive integer) to the vertical pixel (which may be represented by A2, where A2 is a positive integer) in the storage granularity information.

For example, the storage granularity information of the MV information is $2\times2$, that is, A1=2 and A2=2. N1 may be 1, and N2 may be 1. In this case, the horizontal sampling ratio information is 1/2, and the vertical sampling ratio information is 1/2. For another example, the storage granularity information of the MV information is $4\times4$, that is, A1=4 and A2=4. N1 may be 1, and N2 may be 1. In this case, the horizontal sampling ratio information is 1/4, and the vertical sampling ratio information is 1/4. Certainly, N1 may be 2, and N2 may be 2. In this case, the horizontal sampling ratio information is 1/2, and the vertical sampling ratio information is 1/2.

For example, after the encoder uses the RMV information as the MV information in the motion estimation process, the decoder needs to use the MV information to perform motion compensation. In a possible manner, the sampling ratio information of the RMV information may be set based on compensation granularity information required when the decoder performs motion compensation on the code block. For example, the compensation granularity information may be a resolution of a block for which the decoder needs to perform compensation by using the MV information in a motion compensation process. For example, if the compensation granularity information is $4\times4$, it indicates that one MV needs to be used for compensation for each $4\times4$ block in a code block, or it indicates that in the encoding process, a finest case is that one MV may be correspondingly stored for a $4\times4$ block (that is, one MV is correspondingly stored for each $4\times4$ block in one code block. For example, if a size of a code block is $4\times4$, one MV is stored correspondingly. For another example, if a size of a code block is $8\times8$, 4 MVs are correspondingly stored). For example, if a storage granularity of the MV information is $2\times2$, it indicates that one MV needs to be used for compensation for each $2\times2$ block in a code block, or it indicates that in the encoding process, a finest case is that one MV may be correspondingly stored for a $2\times2$ block (that is, one MV is correspondingly stored for each $2\times2$ block in one code block. For example, if a size of a code block is $4\times4$, 4 MVs are correspondingly stored. For another example, if a size of a code block is $8\times8$, 16 MVs are correspondingly stored). For example, the compensation granularity information may include a horizontal pixel and a vertical pixel. For example, the horizontal sampling ratio information corresponding to the RMV information may be a ratio (for example, N3/A3) of a number that can be exactly divided by the horizontal pixel in the compensation granularity information (other than the horizontal pixel in the storage granularity information, and may be represented by N3, where N3 is a positive integer) to the horizontal pixel (which may be represented by A3, where A3 is a positive integer) in the compensation granularity information. The vertical sampling ratio information may be a ratio (for example, N4/A4) of a number that can be exactly divided by the vertical pixel in the compensation granularity information (other than the vertical pixel in the storage granularity information, and may be represented by N4, where N4 is a positive integer) to the vertical pixel (which may be represented by A4, where A4 is a positive integer) in the compensation granularity information.

For example, the compensation granularity information is $2\times2$, that is, A3=2, and A4=2. N3 may be 1, and N4 may be 1. In this case, the horizontal sampling ratio information is 1/2, and the vertical sampling ratio information is 1/2. For another example, the compensation granularity information is $4\times4$, that is, A3=4 and A4=4. N3 may be 1, and N4 may be 1. In this case, the horizontal sampling ratio information is 1/4, and the vertical sampling ratio information is 1/4.

Certainly, N3 may be 2, and N4 may be 2. In this case, the horizontal sampling ratio information is 1/2, and the vertical sampling ratio information is 1/2.

For example, in this embodiment of this application, an example in which the horizontal sampling ratio information is N1/A1, and the vertical sampling ratio information is N2/A2 is used for description.

For example, downsampling may be performed on the rendering information in a horizontal dimension and a vertical dimension based on the horizontal sampling ratio information and the vertical sampling ratio information, to reduce the resolution of the rendering information.

In a possible manner, downsampling may be performed in a sampling manner. For example, sampling in a horizontal dimension may be performed on the rendering information based on the horizontal sampling ratio information, and sampling in a vertical dimension may be performed on the rendering information based on the vertical sampling ratio information, to obtain rendering information with a reduced resolution.

For example, a resolution of the RMV information is W*H, and the RMV information may be expressed as:

$$RMV = \begin{pmatrix} (RMVx_{0,0}, RMVy_{0,0}) & \cdots & (RMVx_{0,(W-1)}, RMVy_{0,(W-1)}) \\ \vdots & \ddots & \vdots \\ (RMVx_{(H-1),0}, RMVy_{(H-1),0}) & \cdots & (RMVx_{(H-1),(W-1)}, RMVy_{(H-1),(W-1)}) \end{pmatrix}$$

Each element in the RMV information may be represented by $(RMVx_{ij}, RMVy_{ij})$, where i and j are integers, a value range of i is 0 to (H-1), and a value range of j is 0 to (W-1).

For example, elements in each row of the RMV information may be sampled based on the horizontal sampling ratio information, to extract $(RMVx_{it}, RMVy_{it})$, where t=QW*j, and QW=A1/N1. For example, when N1=1 and A1=2, QW=2 and t=2j. When N1=1 and A1=4, QW=4 and t=4j. Then, elements in each column in a matrix formed by extracted $(RMVx_{it}, RMVy_{it})$ are sampled based on the vertical sampling ratio information, to extract $(RMVx_{st}, RMVy_{st})$, where s=QH*i, and QH=A2/N2. For example, when N2=1 and A2=2, QH=2 and s=2i. When N2=1 and A2=4, QH=4 and s=4i. Further, RMV information with a reduced sampling rate may be formed by an element $(RMVx_{st}, RMVy_{st})$ extracted from the RMV information, where a resolution of the RMV information with the reduced sampling rate is: $(W/QW) \times (H/QH)$.

For example, elements in each row of the RMV information may be sampled based on the horizontal sampling ratio information, to extract $(RMVx_{it}, RMVy_{it})$, where t=QW*j, and QW=A1/N1. For example, when N1=1 and A1=2, QW=2 and t=2j. When N1=1 and A1=4, QW=4 and t=4j. In addition, elements in each column of the RMV information are sampled based on the vertical sampling ratio information, to extract $(RMVx_{sj}, RMVx_{sj})$, where s=QH*i, and QH=A2/N2. For example, when N2=1 and A2=2, QH=2 and s=2i. When N2=1 and A2=4, QH=4 and s=4i. Then, an intersection set of a matrix including extracted $(RMVx_{it}, RMVx_{it})$ and a matrix including extracted $(RMVx_{sj}, RMVy_{sj})$ may be determined, to obtain $(RMVx_{st}, RMVy_{st})$. Further, RMV information with a reduced sampling rate may be formed by an element $(RMVx_{st}, RMVy_{st})$ extracted from the RMV information, where a resolution of the RMV information with the reduced sampling rate is: $(W/QW) \times (H/QH)$.

For example, a resolution of the ID information is W*H, and the ID information may be expressed as:

$$ID = \begin{pmatrix} (IDR_{0,0}, IDG_{0,0}, IDR_{0,0}) & \cdots & (IDR_{0,(W-1)}, IDG_{0,(W-1)}, IDR_{0,(W-1)}) \\ \vdots & \ddots & \vdots \\ (IDR_{(H-1),0}, IDG_{(H-1),0}, IDR_{(H-1),0}) & \cdots & (IDR_{(H-1),(W-1)}, IDG_{(H-1),(W-1)}, IDR_{(H-1),(W-1)}) \end{pmatrix}$$

Each element in the ID information may be represented by $(IDR_{ij}, IDG_{ij}, IDR_{ij})$, where i and j are integers, a value range of i is 0 to (H-1), and a value range of j is 0 to (W-1).

For example, elements in each row of the ID information may be sampled based on the horizontal sampling ratio information, to extract $(IDR_{it}, IDG_{it}, IDR_{it})$, where t=QW*j, and QW=A1/N1. For example, when N1=1 and A1=2, QW=2 and t=2j. When N1=1 and A1=4, QW=4 and t=4j. Then, elements in each column in a matrix formed by extracted $(IDR_{it}, IDG_{it}, IDR_{it})$ are sampled based on the vertical sampling ratio information, to extract $(IDR_{st}, IDG_{st}, IDR_{st})$, where s=QH*i, and QH=A2/N2. For example, when N2=1 and A2=2, QH=2 and s=2i. When N2=1 and A2=4, QH=4 and s=4i. Further, ID information with a reduced sampling rate may be formed by an element $(IDR_{st}, IDG_{st}, IDR_{st})$ extracted from the ID information, where a resolution of the ID information with the reduced sampling rate is: $(W/QW) \times (H/QH)$.

For example, elements in each row of the ID information may be sampled based on the horizontal sampling ratio information, to extract $(IDR_{it}, IDG_{it}, IDR_{it})$, where t=QW*j, and QW=A1/N1. For example, when N1=1 and A1=2, QW=2 and t=2j. When N1=1 and A1=4, QW=4 and t=4j. In addition, elements in each column of the ID information are sampled based on the vertical sampling ratio information, to extract ($IDR_{sj}$,$IDG_{sj}$,$IDR_{sj}$), where s=QH*i, and QH=A2/N2. For example, when N2=1 and A2=2, QH=2 and s=2i. When N2=1 and A2=4, QH=4 and s=4i. Then, an intersection set of a matrix including extracted ($IDR_{it}$,$IDG_{it}$,$IDR_{it}$) and a matrix including extracted ($IDR_{sj}$,$IDG_{sj}$,$IDR_{sj}$) may be determined, to obtain ($IDR_{st}$,$IDG_{st}$,$IDR_{st}$). Further, ID information with a reduced sampling rate may be formed by an element ($IDR_{st}$,$IDG_{st}$,$IDR_{st}$) extracted from the ID information, where a resolution of the ID information with the reduced sampling rate is: (W/QW)×(H/QH).

For example, a resolution of the depth information is W*H, and the depth information may be expressed as:

$$Depth = \begin{pmatrix} Depth_{0,0} & \cdots & Depth_{0,(W-1)} \\ \vdots & \ddots & \vdots \\ Depth_{(H-1),0} & \cdots & Depth_{(H-1),(W-1)} \end{pmatrix}$$

Each element in the depth information may be represented by $Depth_{ij}$, where i and j are integers, a value range of i is 0 to (H-1), and a value range of j is 0 to (W-1).

For example, elements in each row of the depth information may be sampled based on the horizontal sampling ratio information, to extract $Depth_{it}$, where t=QW*j, and QW=A1/N1. For example, when N1=1 and A1=2, QW=2 and t=2j. When N1=1 and A1=4, QW=4 and t=4j. Then, elements in each column in a matrix formed by extracted $Depth_{it}$ are sampled based on the vertical sampling ratio information, to extract $Depth_{st}$, where s=QH*i, and QH=A2/N2. For example, when N2=1 and A2=2, QH=2 and s=2i. When N2=1 and A2=4, QH=4 and s=4i. Further, depth information with a reduced sampling rate may be formed by an element $Depth_{st}$ extracted from the depth information, where a resolution of the depth information with the reduced sampling rate is: (W/QW)×(H/QH).

For example, elements in each row of the depth information may be sampled based on the horizontal sampling ratio information, to extract $Depth_{it}$, where t=QW*j, and QW=A1/N1. For example, when N1=1 and A1=2, QW=2 and t=2j. When N1=1 and A1=4, QW=4 and t=4j. In addition, elements in each column of the depth information are sampled based on the vertical sampling ratio information, to extract $Depth_{sj}$, where s=QH*i, and QH=A2/N2. For example, when N2=1 and A2=2, QH=2 and s=2i. When N2=1 and A2=4, QH=4 and s=4i. Then, an intersection set of a matrix including extracted $Depth_{it}$ and a matrix including extracted $Depth_{sj}$ may be determined, to obtain $Depth_{st}$. Further, depth information with a reduced sampling rate may be formed by an element $Depth_{st}$ extracted from the depth information, where a resolution of the depth information with the reduced sampling rate is: (W/QW)×(H/QH).

In a possible manner, downsampling may be performed based on multi-tap filtering (that is, a weighted value is calculated). For example, the rendering information may be divided into a plurality of submatrixes based on the horizontal sampling ratio information and the vertical sampling ratio information; and weighting calculation is performed on elements in each submatrix, and rendering information with a reduced resolution is determined based on a weighting calculation result corresponding to each submatrix.

For example, a resolution of the RMV information is W*H, and the RMV information may be expressed as:

$$RMV = \begin{pmatrix} (RMVx_{0,0}, RMVy_{0,0}) & \cdots & (RMVx_{0,(W-1)}, RMVy_{0,(W-1)}) \\ \vdots & \ddots & \vdots \\ (RMVx_{(H-1),0}, RMVy_{(H-1),0}) & \cdots & (RMVx_{(H-1),(W-1)}, RMVy_{(H-1),(W-1)}) \end{pmatrix}$$

Each element in the RMV information may be represented by ($RMVx_{ij}$,$RMVy_{ij}$), where i and j are integers, a value range of i is 0 to (H-1), and a value range of j is 0 to (W-1). $RMVx_{ij}$ is an x component, and $RMVy_{ij}$ is a y component.

For example, the RMV information may be divided into QW×QH submatrixes. Each submatrix may be represented by $M_{p,q}$, p and q are integers, a value range of p is 0 to ((H/QH)-1), and a value range of q is 0 to ((W/QW)-1). In this case, the RMV information may be expressed as:

$$RMV = \begin{pmatrix} M_{0,0} & \cdots & M_{0,((W/QW)-1)} \\ \vdots & \ddots & \vdots \\ M_{((H/QH)-1),0} & \cdots & M_{((H/QH)-1),((W/QW)-1)} \end{pmatrix}$$

Then, for a submatrix, weighting calculation may be performed on an x component of each element in the submatrix, to obtain a weighting calculation result of the x component. In addition, weighting calculation may be performed on a y component of each element in the submatrix, to obtain a weighting calculation result of the y component. Then, the weighting calculation result of the x component and the weighting calculation result of the y component may form a weighting calculation result of the submatrix.

For example, if QW=2 and QH=2,

a weighting calculation result of an x component of $M_{p,q}$ may be:

$$Mx_{p,q} = \left( RMVx_{(2s+1),(2t+1)} + RMVx_{2s,(2t+1)} + RMVx_{(2s+1),2t} + RMVx_{2s,2t} \right) / 4$$

a weighting calculation result of a y component of $M_{p,q}$ may be:

$$My_{p,q} = \left( RMVy_{(2s+1),(2t+1)} + RMVy_{2s,(2t+1)} + RMVy_{(2s+1),2t} + RMVy_{2s,2t} \right) / 4$$

s is an integer with a value range of 0 to W/2, and t is an integer with a value range of 0 to H/2. p=2s, and q=2t.

Then, a weighting calculation result of each submatrix is used to form the RMV information with the reduced sampling rate, and a resolution of the RMV information with the reduced sampling rate is: (W/QW)×(H/QH).

For example, a resolution of the ID information is W*H, and the ID information may be expressed as:

$$ID = \begin{pmatrix} (IDR_{0,0}, IDG_{0,0}, IDR_{0,0}) & \cdots & (IDR_{0,(W-1)}, IDG_{0,(W-1)}, IDR_{0,(W-1)}) \\ \vdots & \ddots & \vdots \\ (IDR_{(H-1),0}, IDG_{(H-1),0}, IDR_{(H-1),0}) & \cdots & (IDR_{(H-1),(W-1)}, IDG_{(H-1),(W-1)}, IDR_{(H-1),(W-1)}) \end{pmatrix}$$

Each element in the ID information may be represented by $(IDR_{ij}, IDG_{ij}, IDR_{ij},)$, where i and j are integers, a value range of i is 0 to (H-1), and a value range of j is 0 to (W-1). $IDR_{ij}$ is an R component, $IDG_{ij}$ is a G component, and $IDR_{ij}$ is a G component.

For example, the ID information may be divided into QW×QH submatrixes. Each submatrix may be represented by $U_{p,q}$, p and q are integers, a value range of p is 0 to ((H/QH)-1), and a value range of q is 0 to ((W/QW)-1). In this case, the ID information may be expressed as:

$$ID = \begin{pmatrix} U_{0,0} & \cdots & U_{0,((W/QW)-1)} \\ \vdots & \ddots & \vdots \\ U_{((H/QH)-1),0} & \cdots & U_{((H/QH)-1),((W/QW)-1)} \end{pmatrix}$$

Then, for a submatrix, weighting calculation may be performed on an R component of each element in the submatrix, to obtain a weighting calculation result of the R component. In addition, weighting calculation may be performed on a G component of each element in the submatrix, to obtain a weighting calculation result of the G component. In addition, weighting calculation may be performed on a B component of each element in the submatrix, to obtain a weighting calculation result of the B component. The weighting calculation result of the R component, the weighting calculation result of the G component, and the weighting calculation result of the B component may form a weighting calculation result of the submatrix.

For example, if QW=2 and QH=2,

a weighting calculation result of an R component of $U_{p,q}$ may be:

$$NR_{p,q} = \left( IDR_{(2s+1),(2t+1)} + IDR_{2s,(2t+1)} + IDR_{(2s+1),2t} + IDR_{2s,2t} \right) / 4$$

a weighting calculation result of a G component of $U_{p,q}$ may be:

$$NG_{p,q} = \left( IDG_{(2s+1),(2t+1)} + IDG_{2s,(2t+1)} + IDG_{(2s+1),2t} + IDG_{2s,2t} \right) / 4$$

a weighting calculation result of a B component of $U_{p,q}$ may be:

$$NB_{p,q} = \left( IDB_{(2s+1),(2t+1)} + IDB_{2s,(2t+1)} + IDB_{(2s+1),2t} + IDB_{2s,2t} \right) / 4$$

s is an integer with a value range of 0 to W/2, and t is an integer with a value range of 0 to H/2. p=2s, and q=2t.

Then, a weighting calculation result of each submatrix is used to form the ID information with the reduced sampling rate, and a resolution of the ID information with the reduced sampling rate is: (W/QW)×(H/QH).

For example, a resolution of the depth information is W*H, and the depth information may be expressed as:

$$Depth = \begin{pmatrix} Depth_{0,0} & \cdots & Depth_{0,(W-1)} \\ \vdots & \ddots & \vdots \\ Depth_{(H-1),0} & \cdots & Depth_{(H-1),(W-1)} \end{pmatrix}$$

Each element in the depth information may be represented by $Depth_{ij}$, where i and j are integers, a value range of i is 0 to (H-1), and a value range of j is 0 to (W-1).

For example, the depth information may be divided into QW×QH submatrixes. Each submatrix may be represented by $DT_{p,q}$, p and q are integers, a value range of p is 0 to ((H/QH)-1), and a value range of q is 0 to ((W/QW)-1). In this case, the depth information may be expressed as:

$$Depth = \begin{pmatrix} DT_{0,0} & \cdots & DT_{0,((W/QW)-1)} \\ \vdots & \ddots & \vdots \\ DT_{((H/QH)-1),0} & \cdots & DT_{((H/QH)-1),((W/QW)-1)} \end{pmatrix}$$

Then, for a submatrix, weighting calculation may be performed on each element in the submatrix, to obtain a weighting calculation result of the submatrix.

For example, if QW=2, and QH=A2=2,

a weighting calculation result of $DT_{p,q}$ may be:

$$NDepth_{p,q} = \left( Depth_{(2s+1),(2t+1)} + Depth_{2s,(2t+1)} + Depth_{(2s+1),2t} + Depth_{2s,2t} \right) / 4$$

s is an integer with a value range of 0 to W/2, and t is an integer with a value range of 0 to H/2. p=2s, and q=2t.

Then, a weighting calculation result of each submatrix is used to form the depth information with the reduced sampling rate, and a resolution of the depth information with the reduced sampling rate is: (W/QW)×(H/QH).

S503: Transmit the rendering information with the reduced resolution.

After the GPU reduces the resolution of the rendering information, rendering information with a reduced resolution may be transmitted to the encoder.

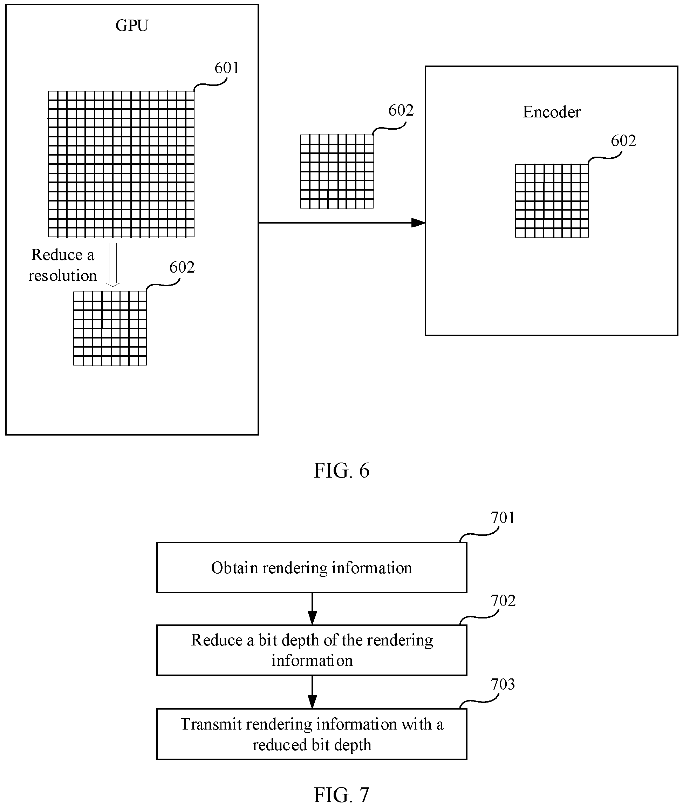

FIG. 6 is a schematic diagram of an example of a data transmission process.

In FIG. 6, a resolution of rendering information 601 obtained by the GPU is 16×16. If horizontal sampling ratio information is 1/2, and vertical sampling ratio information is 1/2, after a resolution of rendering information is reduced, rendering information 602 with a reduced resolution may be obtained with a resolution of 8×8. Then, the rendering information 602 with the reduced resolution is sent to an encoder.

In the foregoing, a data amount of the rendering information transmitted by the GPU to the encoder is reduced by reducing the resolution, so that a transmission delay of the rendering information can be reduced. In addition, the encoder performs encoding after receiving the rendering information. Therefore, in this embodiment of this application, duration of waiting for encoding by the encoder can be reduced, thereby reducing a transmission delay in an entire cloud rendering process. In addition, a decrease in the data amount of the rendering information may further reduce a requirement of the rendering information on a transmission bandwidth. In addition, buffer space that is in the encoder and that is used to store rendering information may also be reduced, so that a buffer of the encoder can be saved.

Scenario 2

For example, precision of rendering information required by the encoder to perform encoding optimization is lower than precision of the rendering information obtained by the GPU. Therefore, in a possible implementation, the rendering information is compressed by reducing precision of the rendering information.

FIG. 7 is a schematic diagram of an example of data processing.

S701: Obtain rendering information.

S701 is similar to S501, and details are not described herein again.

S702: Reduce a bit depth of the rendering information.

For example, the precision of the rendering information is essentially a bit depth of the rendering information. Further, the precision of the rendering information may be reduced by reducing the bit depth of the rendering information, to compress the rendering information.

For example, if the bit depth of the rendering information is a first bit depth value, a second bit depth value may be obtained, where the second bit depth value is less than the first bit depth value. Then, a bit depth of each element in the rendering information is converted from the first bit depth value to the second bit depth value.

For example, the second bit depth value may be determined based on a bit depth (for example, a corresponding value is a third bit depth value) of rendering information required for the encoder to perform encoding optimization and the first bit depth value. Optionally, the second bit depth value may be equal to the third bit depth value. Optionally, the second bit depth value may be greater than the third bit depth value and less than the first bit depth value.

For example, a bit depth of each element in the rendering information may be converted from the first bit depth value to the second bit depth value in a manner of reserving a high bit.

For example, a bit depth of each element in the rendering information may be converted from the first bit depth value to the second bit depth value in a manner of intercepting a high bit.

For example, first bit depth values of different rendering information may be the same or may be different. Second bit depth values corresponding to different rendering information may be the same or may be different. Specifically, the second bit depth value may be set according to a requirement. This is not limited in this embodiment of this application.

For example, for RMV information, a first bit depth value is 32bit, and if a second bit depth value is 16bit, a bit depth of the RMV information may be converted from 32bit to 16bit. Specifically, a bit depth of each element included in the RMV information may be converted from 32bit to 16bit. Specifically, a bit depth of an x component of each element included in the RMV information may be converted from 32bit to 16bit, and a bit depth of a y component of each element included in the RMV information may be converted from 32bit to 16bit. In a specific conversion method, a low-order value may be removed, for example, a method such as reducing a quantity of valid bits after a decimal point is used to control a bit depth.

For example, for ID information, a first bit depth value is 8bit, and if a second bit depth value is 4bit, a bit depth of the ID information may be converted from 8bit to 4bit. Specifically, a bit depth of each element included in the ID information may be converted from 8bit to 4bit. Specifically, a bit depth of an R component of each element included in the ID information may be converted from 8bit to 4bit, a bit depth of a G component of each element included in the ID information may be converted from 8bit to 4bit, and a bit depth of a B component of each element included in the ID information may be converted from 8bit to 4bit. In a specific conversion method, a low-order value may be removed, or a quantization method may be used for representation.

For example, for depth information, a first bit depth value is 8bit, and if a second bit depth value is 4bit, a bit depth of the depth information may be converted from 8bit to 4bit. Specifically, a bit depth of each element included in the depth information may be converted from 8bit to 4bit.

S703: Transmit rendering information with a reduced bit depth.

After a GPU reduces the bit depth of the rendering information, the rendering information with the reduced bit depth may be transmitted to the encoder.

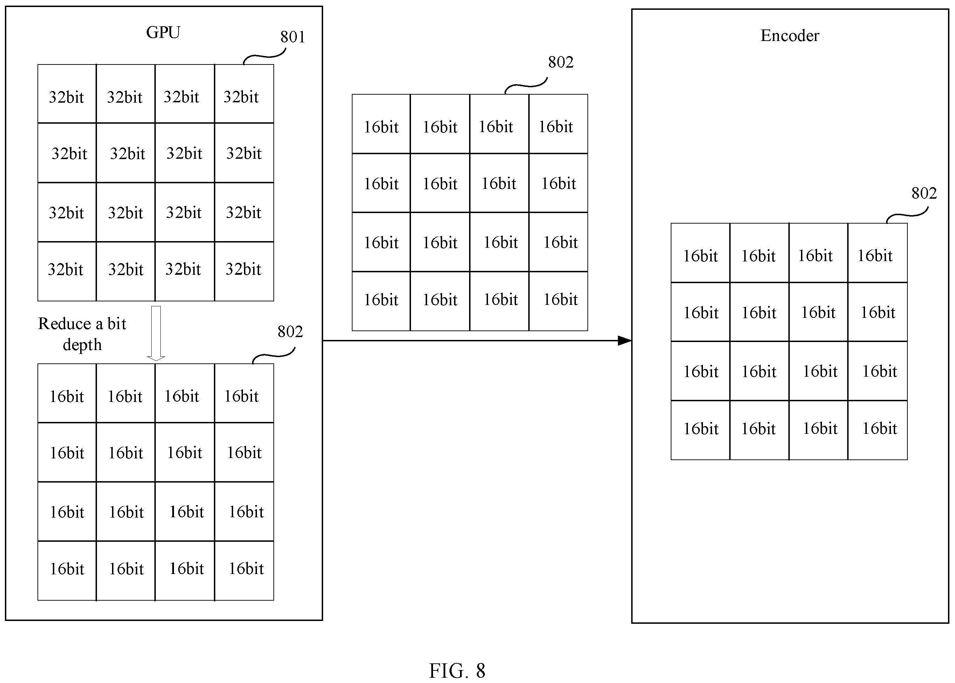

FIG. 8 is a schematic diagram of an example of a data transmission process.

In FIG. 8, a first bit depth value corresponding to rendering information 801 obtained by a GPU is 32bit. If a second bit depth value is 16bit, after a bit depth of rendering information is reduced, rendering information 802 with a reduced bit depth may be obtained with a bit depth of 16bit. Then, the rendering information 802 with the reduced bit depth is sent to the encoder.

In the foregoing, a data amount of the rendering information transmitted by the GPU to the encoder is reduced by reducing the bit depth, so that a transmission delay of the rendering information can be reduced. In addition, the encoder performs encoding after receiving the rendering information. Therefore, in this embodiment of this application, duration of waiting for encoding by the encoder can be reduced, thereby reducing a transmission delay in an entire cloud rendering process. In addition, a decrease in the data amount of the rendering information may further reduce a requirement of the rendering information on a transmission bandwidth. In addition, buffer space that is in the encoder and that is used to store rendering information may also be reduced, so that a buffer of the encoder can be saved.


Scenario 3

Based on the foregoing description, it can be learned that the encoder encodes a rendered image in blocks. Therefore, in a possible implementation, the rendering information is transmitted in blocks. When receiving any information block of the rendering information, the encoder may encode a macroblock corresponding to the information block. In this way, transmission of the rendering information and encoding are performed synchronously, and a time for the encoder to wait for the rendering information can be reduced. In addition, a data amount of the information block is less than a data amount of complete rendering information. Therefore, in this embodiment of this application, a requirement of the rendering information on a transmission bandwidth can also be reduced.

For example, in this embodiment of this application, the GPU may transmit the rendering information to an analysis module in blocks, or may transmit the rendering information to the encoder in blocks. Refer to the foregoing description in FIG. 2. Details are not described herein again. In Embodiment 1 of this application, that the GPU transmits the rendering information to the encoder in blocks is described as an example.

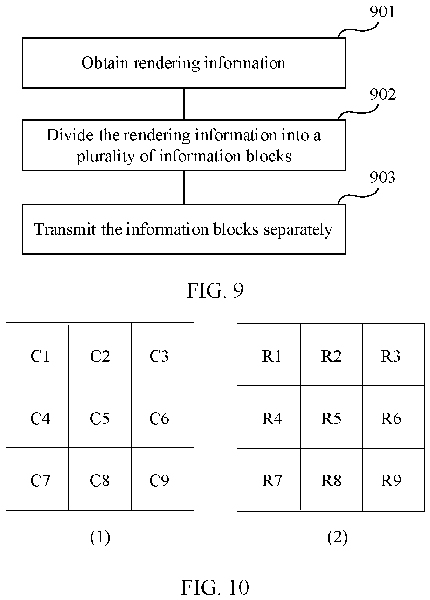

FIG. 9 is a schematic diagram of an example of a data processing procedure.

S901: Obtain rendering information.

S901 is similar to S501, and details are not described herein again.

S902: Divide the rendering information into a plurality of information blocks.

For example, an encoder may preset a block division manner of dividing a rendered image into a plurality of macroblocks. Subsequently, before encoding, the encoder may divide the rendered image into blocks according to the block division manner.

For example, in an application scenario, the encoder may divide all rendered images in a manner. In different application scenarios, the encoder may divide the rendered image into blocks in a same manner or different manners, and specifically, the block division manner may be set based on a requirement. This is not limited in this embodiment of this application.

For example, after setting the block division manner of dividing a rendered image into a plurality of macroblocks, the encoder may send the block division manner to a GPU.

For example, the GPU may actively obtain, from the encoder, the block division manner set by the encoder. Optionally, before performing a rendering operation, the GPU may obtain, from the encoder, the block division manner set by the encoder. Optionally, after obtaining the rendering information, the GPU may obtain, from the encoder, the block division manner set by the encoder.

For example, the GPU pre-fixes the block division manner of the encoder for the rendered image, so that the GPU may directly use a fixed block division manner.

For example, after obtaining the block division manner of the encoder for the rendered image, the GPU may divide the rendering information into blocks in the block division manner, to obtain a plurality of information blocks.

FIG. 10 is a schematic diagram of an example of block division.

(1) in FIG. 10 shows a rendered image, where the rendered image is divided into 9 macroblocks: C1, C2, C3, C4, C5, C6, C7, C8, and C9.

(2) in FIG. 10 shows rendering information. The GPU divides the rendering information into 9 information blocks: R1, R2, R3, R4, R5, R6, R7, R8, and R9 according to a block division manner of the rendered image in (1) in FIG. 10.

S903: Transmit information blocks separately.

For example, after dividing the rendered image into a plurality of macroblocks, the encoder may set an encoding sequence for the plurality of macroblocks, and subsequently, encode macroblocks according to the encoding sequence of the macroblocks.

For example, in an application scenario, the encoder may encode the plurality of macroblocks in a same sequence. In different application scenarios, the encoder may encode a plurality of macroblocks in a same sequence or different sequences, and specifically, the encoding sequence may be set based on a requirement. This is not limited in this embodiment of this application.

For example, after setting the encoding sequence for the plurality of macroblocks, the encoder may send the encoding sequence to the GPU.

For example, the GPU may actively obtain, from the encoder, the encoding sequence set by the encoder for the plurality of macroblocks. Optionally, before performing the rendering operation, the GPU may obtain, from the encoder, the encoding sequence set by the encoder for the plurality of macroblocks. Optionally, after obtaining the rendering information, the GPU may obtain, from the encoder, the encoding sequence set by the encoder for the plurality of macroblocks.

For example, the GPU pre-fixes the encoding sequence set by the encoder for the plurality of macroblocks, so that the GPU may directly use a fixed encoding sequence.

For example, the GPU may determine a transmission sequence of information blocks according to a preset encoding sequence. Refer to (1) in FIG. 10 again. If an encoding sequence of the 9 macroblocks of the rendered image in (1) in FIG. 10 is C1→C2→C3→C4→C5→C6→C7→C8→C9, a transmission sequence of the 9 information blocks of the rendering information in (2) in FIG. 10 may be R1→R2→R3→R4→R5→R6→R7→R8→R9.

For example, the GPU may sequentially send the information blocks according to the transmission sequence of the information blocks, so that the information blocks may be serially transmitted to the encoder. Correspondingly, the encoder may receive the information blocks in sequence.

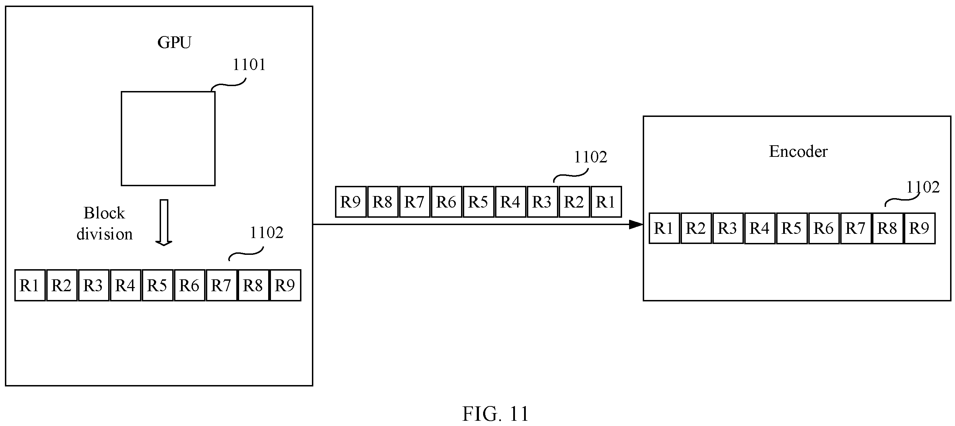

FIG. 11 is a schematic diagram of an example of an information block transmission process. Refer to FIG. 11. The GPU divides rendering information 1101 into 9 information blocks 1102 (including R1, R2, R3, R4, R5, R6, R7, R8, and R9), and then sequentially transmits R1, R2, R3, R4, R5, R6, R7, R8, and R9 to the encoder according to a sequence of R1→R2→R3→R4→R5→R6→R7→R8→R9. Correspondingly, the encoder may first receive R1, then receive R2, and then receive R3, and so on.

For example, the GPU may simultaneously send a plurality of information blocks (a plurality of information blocks with consecutive numbers, for example, C1 and C2, C3 and C4, and so on) each time according to a transmission sequence of the information blocks, so that the plurality of information blocks may be transmitted in parallel to the encoder. Because a transmission bandwidth between the GPU and the encoder is limited, for serial transmission of information blocks, a time for the encoder to wait for receiving rendering information is less than that for parallel transmission of information blocks. In this embodiment of this application, serial transmission of information blocks is used as an example for description.

For example, after sending a current information block, the GPU may wait for set duration before sending a next information block. The set duration is determined based on transmission duration of one information block and encoding duration of the encoder for one macroblock, and it only needs to be ensured that a next information block is transmitted to the encoder before or when the encoder encodes a next macroblock.

For example, the set duration may be 0. In this case, after sending an information block, the GPU may immediately send a next information block.

For example, the set duration may be transmission duration of one information block. In this case, after sending one information block and determining that the information block is successfully received by the encoder, the GPU sends a next information block. When detecting that one information block is received, the encoder may return a response to the GPU, to notify the GPU that the information block is successfully received.

For example, the set duration may be equal to difference duration between encoding duration of a macroblock and transmission duration of an information block. In this case, after sending an information block, the GPU may wait for the difference duration before sending a next information block, so that when the encoder encodes a next macroblock, a next information block is just transmitted to the encoder.

For example, the set duration may be less than difference duration between encoding duration of a macroblock and transmission duration of an information block. In this case, after sending an information block, the GPU may wait for the set duration before sending a next information block. Therefore, before the encoder encodes a next macroblock, the next information block may be transmitted to the encoder.

The following uses an example in which the set duration is transmission duration of one information block for description.

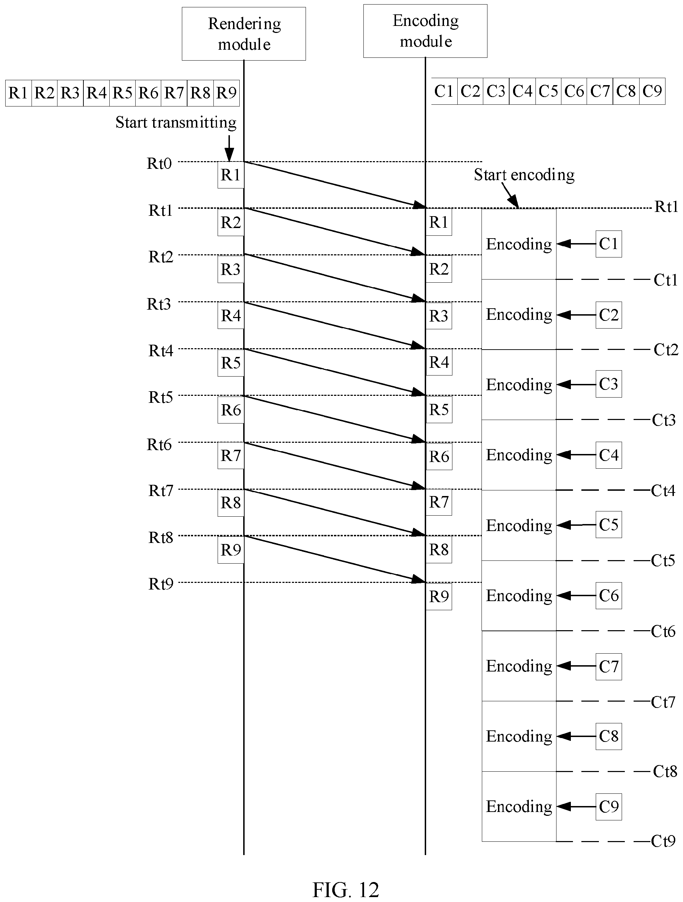

FIG. 12 is a schematic diagram of an example of transmission and encoding. In FIG. 12, an encoder performs serial encoding.

For ease of description, it is assumed that transmission duration of an information block is Rt, encoding duration of a macroblock is Ct, and there are 9 information blocks and 9 macroblocks (for a block division manner of the information block and the macroblock, refer to FIG. 10, and for a transmission sequence of the information block and an encoding sequence of a macroblock, refer to FIG. 11).

In FIG. 12, for example, Rt:Ct=5:8. A time difference between Rt0 and Rt1, a time difference between Rt1 and Rt2, a time difference between Rt2 and Rt3, and the like are all Rt, and a time difference between Rt1 and Ct1, a time difference between Ct1 and Ct2, a time difference between Ct2 and Ct3, and the like are all Ct.

In FIG. 12, a GPU starts to transmit rendering information at a moment Rt0. Details are as follows.

At the moment Rt0:

the GPU sends an information block R1.

At a moment Rt1:

an encoder receives the information block R1, and starts to encode a macroblock C1; and
the GPU starts to send an information block R2.

At a moment Rt2:

the encoder receives the information block R2; and
the GPU starts to send an information block R3.

At a moment Ct1:
the encoder completes encoding of C1 and starts to encode C2.

At a moment Rt3:

the encoder receives the information block R3; and
the GPU starts to send an information block R4.

At a moment Rt4:

the encoder receives the information block R4; and
the GPU starts to send an information block R5.

At a moment Ct2:
the encoder completes encoding of C2 and starts to encode C3.

At a moment Rt5:

the encoder receives the information block R5; and
the GPU starts to send an information block R6.

At a moment Ct3:
the encoder completes encoding of C3 and starts to encode C4.

At a moment Rt6:

the encoder receives the information block R6; and
the GPU starts to send an information block R7.

At a moment Rt7:

the encoder receives the information block R7; and

the GPU starts to send an information block R8.

At a moment Ct4:
the encoder completes encoding of C4 and starts to encode C5.

At a moment Rt8:

the encoder receives the information block R8; and
the GPU starts to send an information block R9.

At a moment Ct5:
the encoder completes encoding of C5 and starts to encode C6.
At a moment Rt9:
the encoder receives the information block R9.
At a moment Ct6:
the encoder completes encoding of C6 and starts to encode C7.
At a moment Ct7:
the encoder completes encoding of C7 and starts to encode C8.
At a moment Ct8:
the encoder completes encoding of C8 and starts to encode C9.
At a moment Ct9:
the encoder completes encoding of C9.
For example, after completing encoding optimization based on an information block, the encoder may release a buffer of the information block, to save buffer space of the encoder.
For example, at the moment Ct1, after the encoder completes encoding of C1 and completes encoding optimization based on R1, buffer space that is in the encoder and that is used to store R1 may be released. At the moment Ct2, after the encoder completes encoding of C2 and completes encoding optimization based on R2, buffer space that is in the encoder and that is used to store R2 may be released, and so on.
It should be noted that, if the GPU has generated a next frame of rendered image at the moment Rt9, the GPU may send the next frame of rendered image at the moment Rt9, and divide rendering information of the next frame of rendered image into blocks. Then, after the next frame of rendered image is transmitted to the encoder, refer to FIG. 12 and corresponding descriptions, an information block of rendering information corresponding to the next frame of rendered image is sent, and details are not described herein again.
It should be noted that, before the encoder completes encoding of C9 at the moment Ct9, if a next frame of rendered image is received and at least one information block of rendering information corresponding to the next frame of rendered image is received, the encoder may start to encode a macroblock of the next frame of rendered image at the moment Ct9 referring to FIG. 12 and corresponding descriptions. Details are not described herein again. To be specific, if the encoder receives, in a process of encoding a current frame of rendered image, a next frame of rendered image and at least one information block of rendering information corresponding to the next frame of rendered image, after completing encoding of the current frame of rendered image, the encoder directly encodes the next frame of rendered image without waiting for the duration of Rt.

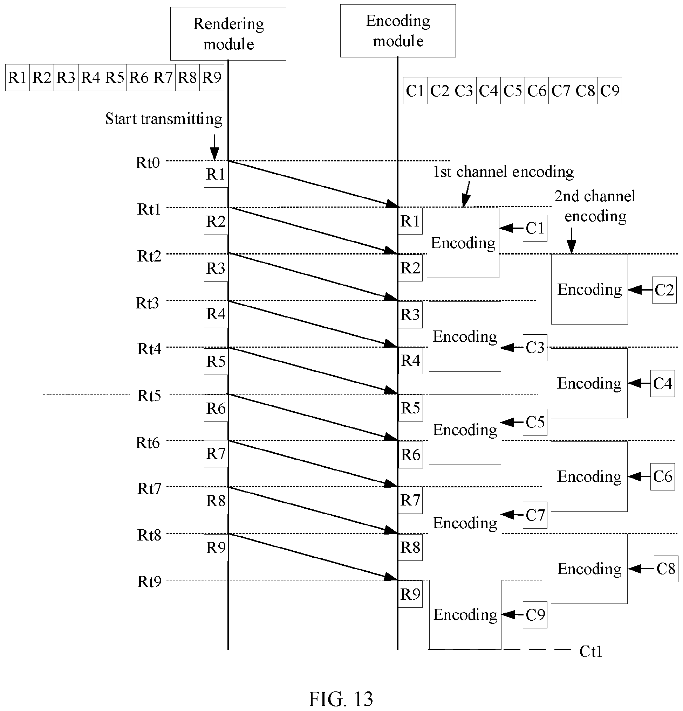

FIG. 13 is a schematic diagram of an example of transmission and encoding. In FIG. 13, the encoder performs parallel encoding, for example, 2-channel parallel encoding.
For ease of description, it is assumed that transmission duration of an information block is Rt, encoding duration of a macroblock is Ct, and there are 9 information blocks and 9 macroblocks (for a block division manner of the information block and the macroblock, refer to FIG. 10, and for a transmission sequence of the information block and an encoding sequence of a macroblock, refer to FIG. 11).
In the example of FIG. 13, Rt:Ct=5:8. A time difference between Rt0 and Rt1, a time difference between Rt1 and Rt2, a time difference between Rt2 and Rt3, and the like are all Rt, and a time difference between Rt9 and Ct1 is Ct.
In FIG. 12, a GPU starts to transmit rendering information at a moment Rt0. Details are as follows.
At the moment Rt0:
the GPU sends an information block R1.
At a moment Rt1:

an encoder receives the information block R1, and starts to encode a macroblock C1; and
the GPU starts to send an information block R2.

At a moment Rt2:

the encoder receives the information block R2, and starts to encode a macroblock C2; and
the GPU starts to send an information block R3.

At a moment Rt3:

an encoder receives the information block R3, and starts to encode a macroblock C3; and
the GPU starts to send an information block R4.

At a moment Rt4:

the encoder receives the information block R4, and starts to encode a macroblock C4; and
the GPU starts to send an information block R5.

At a moment Rt5:

the encoder receives the information block R5, and starts to encode a macroblock C5; and
the GPU starts to send an information block R6.

At a moment Rt6:

the encoder receives the information block R6, and starts to encode a macroblock C6; and
the GPU starts to send an information block R7.

At a moment Rt7:

the encoder receives the information block R7, and starts to encode a macroblock C7; and
the GPU starts to send an information block R8.

At a moment Rt8:

the encoder receives the information block R8, and starts to encode a macroblock C8; and
the GPU starts to send an information block R8.

At a moment Rt9:
the encoder receives the information block R9, and starts to encode a macroblock C9.
At a moment Ct1:
the encoder completes encoding of C9.
It should be noted that, if the GPU has generated a next frame of rendered image at the moment Rt9, the GPU may send the next frame of rendered image at the moment Rt9, and divide and number rendering information of the next frame of rendered image. Then, after the next frame of rendered image is transmitted to the encoder, refer to FIG. 10 and corresponding descriptions, an information block of rendering information corresponding to the next frame of rendered image is sent, and details are not described herein again.
It should be noted that, before the encoder completes encoding of C9 at the moment Ct9, if a next frame of rendered image is received, and at least one information block of rendering information corresponding to the next frame of rendered image is received, the encoder may start to encode the information block of the next frame of rendered image at the moment Ct9 referring to FIG. 10 and corresponding descriptions. Details are not described herein again. To be specific, if the encoder receives, in a process of encoding a current frame of rendered image, a next frame of rendered image and at least one information block of rendering information corresponding to the next frame of rendered image, after completing encoding of the current frame of rendered image, the encoder directly encodes the next frame of rendered image without waiting for the duration of Rt.
It can be learned from FIG. 12 and FIG. 13 that, in this embodiment of this application, if the encoder does not receive, in a process of encoding an $n^{th}$ (n is a positive integer) frame of rendered image, an information block of rendering information corresponding to an $(n+1)^{th}$ frame of rendered image, after completing encoding of the $n^{th}$ frame of rendered image, the encoder may start to encode the $(n+1)^{th}$ frame of rendered image after waiting for T=Rt (that is, transmission duration of one information block). However, in the conventional technology, the encoder needs to wait for T=9*Rt (that is, total transmission duration of the rendering information). In other words, compared with the conventional technology, in this case, waiting duration of the encoder in this embodiment of this application is reduced by 8*Rt.
In this embodiment of this application, if the encoder receives, in the process of encoding the $n^{th}$ frame of rendered image, the (n+1)$^{th}$ frame of rendered image and at least one information block corresponding to the rendering information, after completing encoding of the n$^{th}$ frame of rendered image, the encoder may immediately start to encode the (n+1)$^{th}$ frame of rendered image. However, in the conventional technology, the encoder needs to wait for T=9*Rt. In other words, compared with the conventional technology, in this case, waiting duration of the encoder in this embodiment of this application is reduced by 9*Rt.

In the foregoing embodiments of this application, the GPU transmits the rendering information in blocks according to a sequence of encoding macroblocks of the rendered image by the encoder, so that encoding and rendering information transmission are performed synchronously. This can reduce duration for the encoder to wait for encoding, thereby reducing a transmission delay and a transmission bandwidth requirement of the rendering information. In addition, the encoder performs encoding after receiving the rendering information. Therefore, in this embodiment of this application, duration of waiting for encoding by the encoder can be reduced, thereby reducing a transmission delay in an entire cloud rendering process. In addition, after completing encoding optimization based on an information block, the encoder releases a buffer of the information block, which can save buffer space of the encoder.

Scenario 4

For example, the foregoing two manners of compressing the rendering information may be mixed to compress the rendering information, to further reduce a data amount of the rendering information, thereby further reducing a transmission delay and a transmission bandwidth requirement of the rendering information, and further saving buffer space used by the encoder to store the rendering information.

In a possible implementation, a resolution of the rendering information may be first reduced, and then a bit depth of the rendering information is reduced.

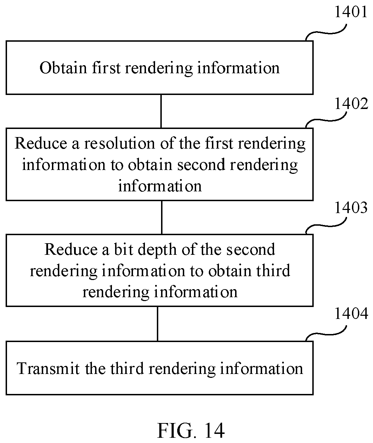

FIG. 14 is a schematic diagram of an example of a data processing procedure.

S1401: Obtain first rendering information.

For ease of description, rendering information obtained by a GPU may be referred to as the first rendering information.

S1402 is similar to S501, and details are not described herein again.

S1402: Reduce a resolution of the first rendering information to obtain second rendering information.

S1402 is similar to S502, and details are not described herein again.

Rendering information with a reduced resolution may be referred to as the second rendering information.

S1403: Reduce a bit depth of the second rendering information to obtain third rendering information.

S1403 is similar to S702, and details are not described herein again.

Rendering information with a reduced resolution and a reduced bit depth may be referred to as the third rendering information.

S1404: Transmit the third rendering information.

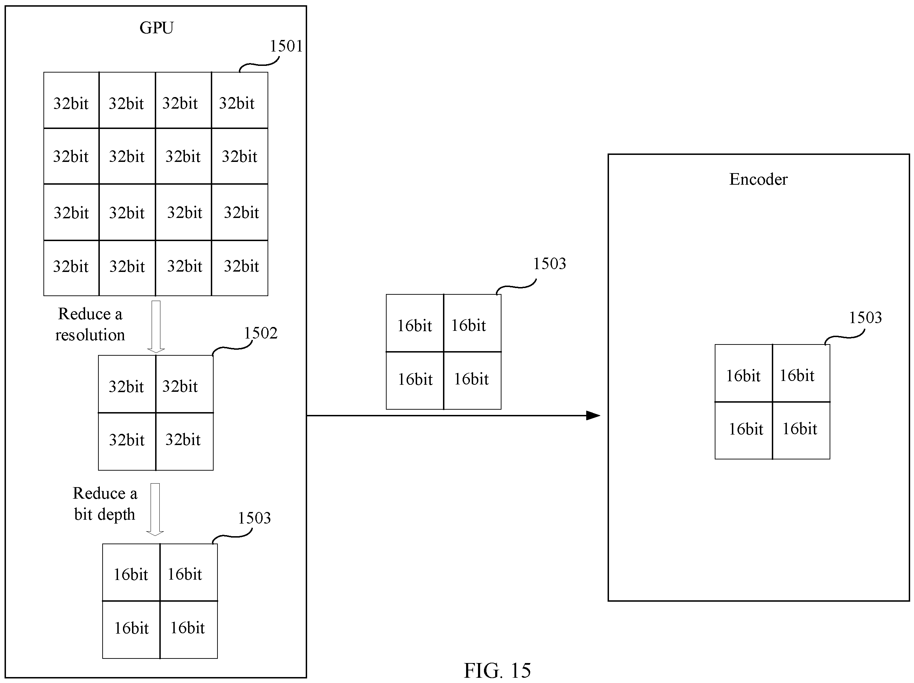

FIG. 15 is a schematic diagram of an example of a data transmission process.

Refer to FIG. 15. It is assumed that a resolution of rendering information (that is, the first rendering information) 1501 obtained by the GPU is 4×4, and a bit depth is a first bit depth value 32bit. If horizontal sampling ratio information is 1/2, and vertical sampling ratio information is 1/2, after the resolution of the rendering information is reduced, rendering information (that is, the second rendering information) 1502 with a reduced resolution may be obtained with a resolution of 2×2 and a bit depth of 32bit. If a second bit depth value is 16bit, after a bit depth of the rendering information 1502 with a reduced resolution is reduced, rendering information (that is, third rendering information) 1503 with a reduced resolution and a reduced bit depth may be obtained with a resolution of 2×2 and a bit depth of 16bit. Then, the third rendering information 1503 is transmitted to the encoder.

Scenario 5

In a possible implementation, a bit depth of the rendering information may be first reduced, and then a resolution of the rendering information is reduced.

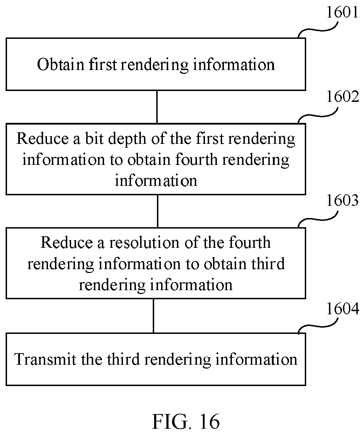

FIG. 16 is a schematic diagram of an example of a data processing procedure.

S1601: Obtain first rendering information.

For ease of description, rendering information obtained by a GPU may be referred to as the first rendering information.

S1602 is similar to S501, and details are not described herein again.

S1602: Reduce a bit depth of the first rendering information to obtain fourth rendering information.

S1602 is similar to S702, and details are not described herein again.

Rendering information with a reduced bit depth may be referred to as fourth rendering information.

S1603: Reduce a bit depth of the fourth rendering information to obtain third rendering information.

S1603 is similar to S502, and details are not described herein again.

Rendering information with a reduced resolution and a reduced bit depth may be referred to as the third rendering information.

S1604: Transmit the third rendering information.

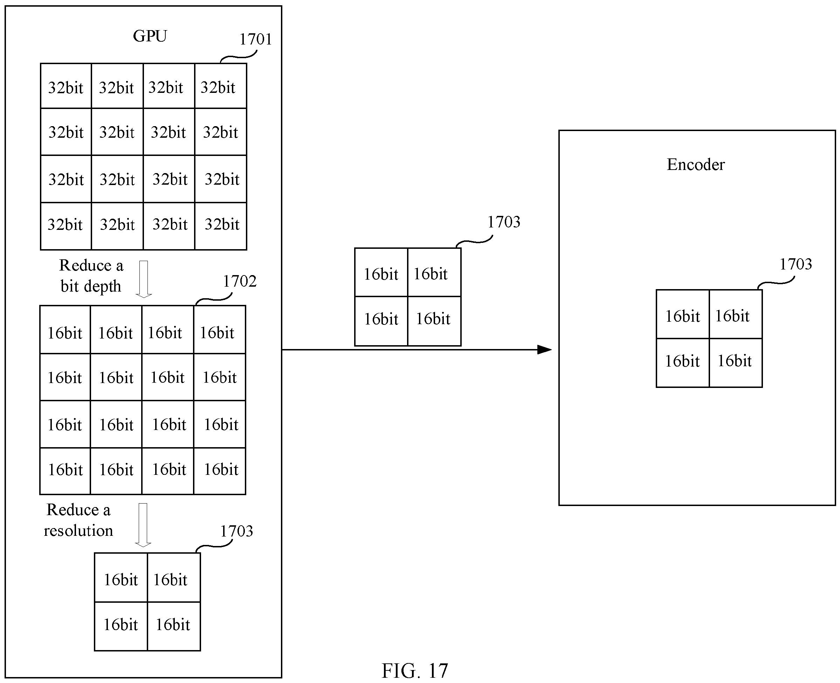

FIG. 17 is a schematic diagram of an example of a data transmission process.

Refer to FIG. 17. It is assumed that a resolution of rendering information (that is, first rendering information) 1701 obtained by a GPU is 4×4, and a bit depth is a first bit depth value 32bit. If a second bit depth value is 16bit, after a bit depth of the first rendering information 1701 is reduced, rendering information (that is, fourth rendering information) 1702 with a reduced bit depth is obtained with a resolution of 4×4 and a bit depth of 16bit. If horizontal sampling ratio information is 1/2, and vertical sampling ratio information is 1/2, a resolution of the rendering information with a reduced bit depth is reduced, and rendering information (that is, third rendering information) 1703 with a reduced resolution and a reduced bit depth is obtained with a resolution of 2×2 and a bit depth of 16bit. Then, the third rendering information 1703 is transmitted to the encoder.

Scenario 6

In a possible manner, the rendering information may be first divided into a plurality of information blocks, and then the information blocks are compressed and then transmitted in blocks, so that a data amount for transmitting each information block can be reduced, a transmission delay and a transmission bandwidth requirement of the rendering information can be further reduced, and buffer space used by the encoder to store the information blocks can be saved.

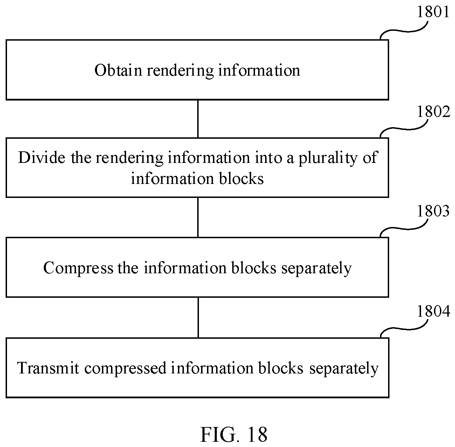

FIG. 18 is a schematic diagram of an example of a data processing procedure.

S1801: Obtain rendering information.

S1802 is similar to S501, and details are not described herein again.

S1802: Divide the rendering information into a plurality of information blocks.

S1802 is similar to S902, and details are not described herein again.

S1803: Compress the information blocks separately.

In a possible manner, a resolution of each information block may be reduced only.

For example, a resolution of each information block may be reduced by referring to the foregoing descriptions of reducing the resolution of the rendering information in Scenario 1. For example, refer to FIG. 10. The rendering information is divided into 9 information blocks. If a resolution of the rendering information is W×H, a resolution corresponding to each information block is L×M, where W=3L and H=3M. If horizontal sampling ratio information is N1/A1, and vertical sampling ratio information is N2/A2, after a resolution of each information block is reduced, an obtained resolution of the information block with a reduced resolution is (L*(N2/A2))×(M*(N2/A2)).

For example, a resolution of an information block R1 is 32×32. It is assumed that the horizontal sampling ratio information is 1/2, and the vertical sampling ratio information is 1/2. Then, downsampling is performed on the information block R1 based on the horizontal sampling ratio information of 1/2 and the vertical sampling ratio information of 1/2, to obtain the information block R1 with a reduced resolution, where the resolution of the information block R1 is 16×16.

In a possible manner, a bit depth of each information block may be reduced only.

In a possible manner, a resolution of each information block may be first reduced, and then a bit depth of each information block is reduced.

In a possible manner, a bit depth of each information block may be first reduced, and then a resolution of each information block is reduced.

S1804: Transmit the compressed information blocks separately.

S1804 is similar to S903 in Scenario 3, and details are not described herein again.

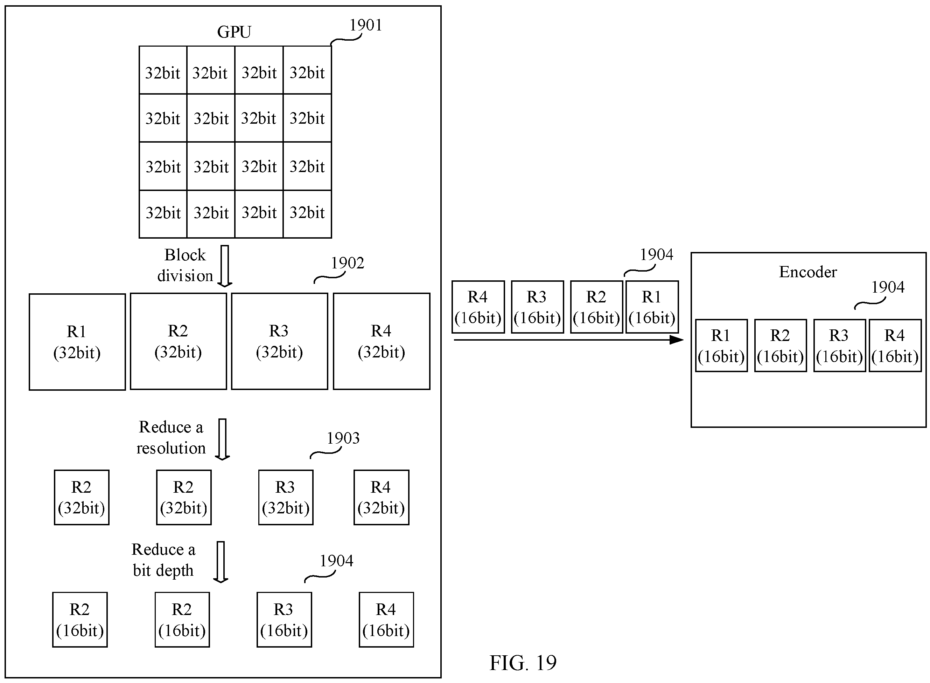

FIG. 19 is a schematic diagram of an example of a data transmission process.

Refer to FIG. 19. It is assumed that a resolution of rendering information 1901 obtained by a GPU is 16×16, and a bit depth is a first bit depth value 32bit. The rendering information may be first divided into a plurality of information blocks 1902 (including 4 information blocks), where a resolution of each information block is 8×8, and a bit depth is 32bit. It is assumed that horizontal sampling ratio information is 1/2, and vertical sampling ratio information is 1/2. After a resolution of each information block is reduced, an information block 1903 with a reduced resolution may be obtained, where a resolution of each information block 1903 is 4×4, and a bit depth is 32bit. It is assumed that a second bit depth value is 16bit, a bit depth of each information block 1903 may be reduced, to obtain an information block 1904 with a reduced resolution and a reduced bit depth, where a resolution of each information block 1904 is 4×4, and a bit depth is 16bit. Then, 4 information blocks 1904 are transmitted to the encoder, so that the encoder may sequentially receive information blocks R1, R2, R3, and R4 with a resolution of 4×4 and a bit depth of 16bit.

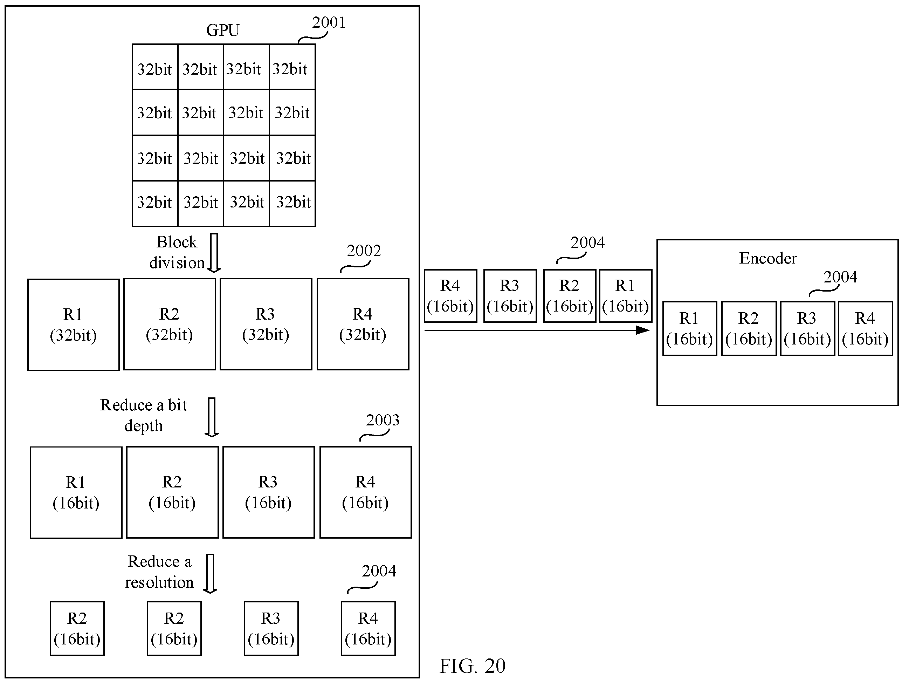

FIG. 20 is a schematic diagram of an example of a data transmission process.

Refer to FIG. 20. It is assumed that a resolution of rendering information 2001 obtained by a GPU is 16×16, and a bit depth is a first bit depth value 32bit. The rendering information may be first divided into a plurality of information blocks 2002 (including 4 information blocks), where a resolution of each information block is 8×8, and a bit depth is 32bit. If a second bit depth value is 16bit, a bit depth of each information block 1902 may be reduced, to obtain an information block 2003 with a reduced bit depth. A resolution of each information block 1903 is 8×8, and a bit depth is 16bit. It is assumed that horizontal sampling ratio information is 1/2, and vertical sampling ratio information is 1/2, a resolution of each information block with a reduced bit depth is reduced, to obtain an information block 2004 with a reduced resolution and a reduced bit depth, where a resolution of each information block 2004 is 4×4, and a bit depth is 16bit. Then, 4 information blocks 2004 are transmitted to the encoder, so that the encoder may sequentially receive information blocks R1, R2, R3, and R4 with a resolution of 4×4 and a bit depth of 16bit.

Scenario 7

In a possible manner, the rendering information may be compressed first, and then compressed rendering information is transmitted in blocks, so that a data amount for transmitting the rendering information can be reduced, a transmission delay and a transmission bandwidth requirement of the rendering information can be further reduced, and buffer space of the encoder for the information block is saved.

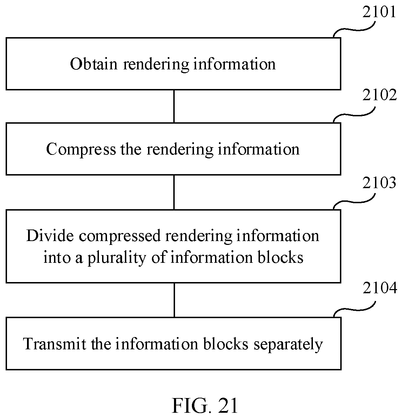

FIG. 21 is a schematic diagram of an example of a data processing procedure.

S2101: Obtain rendering information.

S2101 is similar to S501, and details are not described herein again.

S2102: Compress rendering information.

In a possible manner, a resolution of each information block may be first reduced, and then a bit depth of each information block is reduced. Refer to the descriptions in Scenario 4, and details are not described herein again.

In a possible manner, a bit depth of each information block may be first reduced, and then a resolution of each information block is reduced. Refer to the descriptions in Scenario 5, and details are not described herein again.

In a possible manner, a resolution of each information block may be reduced only. This is similar to what described in Scenario 1, and details are not described herein again.

In a possible manner, a bit depth of each information block may be reduced only. This is similar to what described in Scenario 2, and details are not described herein again.

S2103: Divide the compressed rendering information into a plurality of information blocks.

S2103 is similar to S902, and details are not described herein again.

For example, a resolution of the rendering information obtained after the resolution is reduced is less than a resolution of a corresponding rendered image. If it is assumed that the resolution of the rendered image is W×H, and the resolution of the rendering information obtained after the resolution is reduced is (W/QW)×(H/QH), a block division manner of the rendered image is: dividing the rendered image into a plurality of macroblocks with a resolution of L×M, where L and M are integers greater than 1. A resolution ratio of the macroblock to the rendered image may be calculated as follows: (L/W)×(M/H), and a resolution of each information block, that is, [(W/QW)*(L/W)]×[(H/QH)*(M/H)], is calculated based on the resolution ratio of the macroblock to the rendered image and the resolution of the rendering information obtained after the resolution is reduced. Then, the rendering information with a reduced resolution is divided into a plurality of information blocks based on a resolution of each information block.

For example, if W=64 and H=64, the resolution of the rendered image is 64×64;

if QH=2 and QW=2, the resolution of the rendering information obtained after the resolution is reduced is 32×32;
if L=16 and M=16, a resolution of the macroblock is 16×16, that is, the rendered image is divided into 4 16×16 macroblocks;
a resolution ratio of the macroblock to the rendered image may be calculated as (1/4)×(1/4); and
based on the resolution ratio (1/4)×(1/4) of the macroblock to the rendered image and the resolution of the rendering information obtained after the resolution is reduced, that is, 32×32, the resolution of the information block may be calculated as 8×8. Further, the rendering information with a reduced resolution may be divided into 4 8×8 information blocks, and one 8×8 information block corresponds to one 16×16 macroblock.

S2104: Transmit information blocks separately.

S2104 is similar to S903 in Scenario 3, and details are not described herein again.

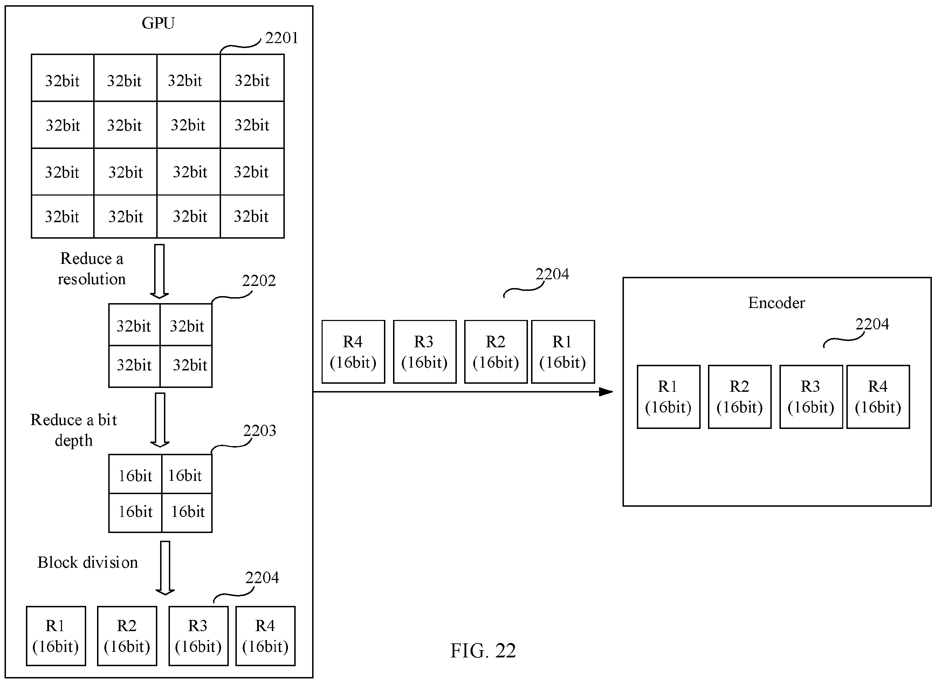

FIG. 22 is a schematic diagram of an example of a data transmission process.

Refer to FIG. 22. It is assumed that a resolution of rendering information 2201 obtained by a GPU is 16×16, and a bit depth is a first bit depth value 32bit. If horizontal sampling ratio information is 1/2, and vertical sampling ratio information is 1/2, after the resolution of the rendering information is reduced, rendering information 2202 with a reduced resolution may be obtained with a resolution of 8×8 and a bit depth of 32bit. If a second bit depth value is 16bit, a bit depth of the rendering information 2202 with a reduced resolution is reduced, and rendering information 2203 with a reduced resolution and a reduced bit depth is obtained with a resolution of 8×8 and a bit depth of 16bit. Then, the rendering information with the reduced resolution and the reduced bit depth may be divided into a plurality of information blocks 2204 (including 4 information blocks), where a resolution of each information block is 4×4, and a bit depth is 16bit. Then, 4 information blocks 2204 are transmitted to the encoder, so that the encoder may sequentially receive information blocks R1, R2, R3, and R4 with a resolution of 4×4 and a bit depth of 16bit.

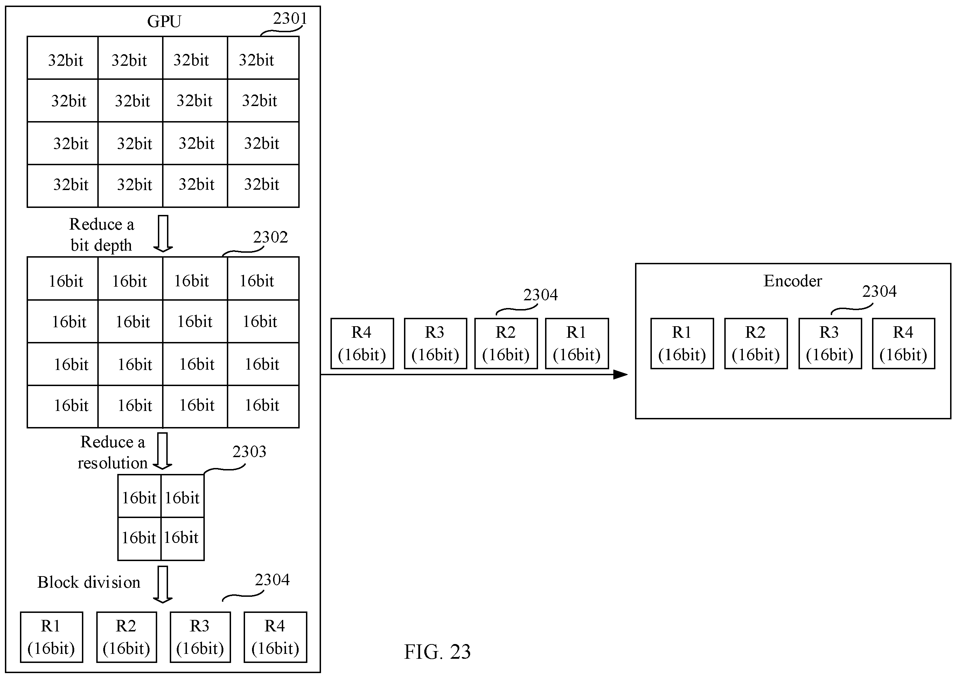

FIG. 23 is a schematic diagram of an example of a data transmission process.

Refer to FIG. 23. It is assumed that a resolution of rendering information 2301 obtained by a GPU is 16×16, and a bit depth is a first bit depth value 32bit. If a second bit depth value is 16bit, the bit depth of the rendering information 2301 is reduced, to obtain rendering information 2202 with a reduced bit depth, where a resolution of the rendering information 2202 is 16×16, and a bit depth is 16bit. If horizontal sampling ratio information is 1/2, and vertical sampling ratio information is 1/2, after a resolution of the rendering information with a reduced bit depth is reduced, rendering information 2203 with a reduced resolution and a reduced bit depth may be obtained with a resolution of 8×8 and a bit depth of 16bit. Then, the rendering information with the reduced resolution and the reduced bit depth may be divided into a plurality of information blocks 2204 (including 4 information blocks), where a resolution of each information block is 4×4, and a bit depth is 16bit. Then, 4 information blocks 2204 are transmitted to the encoder, so that the encoder may sequentially receive information blocks R1, R2, R3, and R4 with a resolution of 4×4 and a bit depth of 16bit.

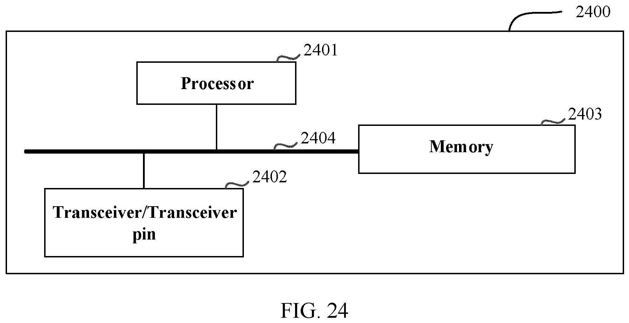

The following describes an apparatus provided in an embodiment of this application. As shown in FIG. 24.

In an example, FIG. 24 is a schematic block diagram of an apparatus 2400 according to an embodiment of this application. The apparatus 2400 may include a processor 2401 and a transceiver/transceiver pin 2402, and optionally, further include a memory 2403.

Components of the apparatus 2400 are coupled together by using a bus 2404. In addition to a data bus, the bus 2404 further includes a power bus, a control bus, and a status signal bus. However, for clear description, various buses in the figure are referred to as the bus 2404.

Optionally, the memory 2403 may be used to store instructions in the foregoing method embodiments. The processor 2401 may be configured to: execute instructions in the memory 2403, control a receive pin to receive a signal, and control a transmit pin to send a signal.

The apparatus 2400 may be the electronic device or a chip of the electronic device in the foregoing method embodiments.

All related content of the steps in the foregoing method embodiments may be cited in function descriptions of the corresponding functional modules. Details are not described herein again.

This embodiment further provides a computer storage medium. The computer storage medium stores computer instructions. When the computer instructions are run on an electronic device, the electronic device is enabled to perform the related method steps, to implement the data processing method in the foregoing embodiments.

This embodiment further provides a computer program product. When the computer program product is run on a computer, the computer is enabled to perform the foregoing related steps, to implement the data processing method in the foregoing embodiments.

In addition, an embodiment of this application further provides an apparatus, the apparatus may be specifically a chip, a component, or a module, and the apparatus may include a processor and a memory that are connected. The memory is used to store a computer executable instruction, and when the apparatus is run, the processor may execute the computer executable instruction stored in the memory, so that the chip performs the data processing method in the foregoing method embodiments.

The electronic device, the computer storage medium, the computer program product, or the chip provided in this embodiment is configured to perform the corresponding method provided above. Therefore, for beneficial effects that can be achieved, refer to the beneficial effects of the corresponding method provided above. Details are not described herein again.

Based on descriptions about the foregoing implementations, a person skilled in the art may understand that, for a purpose of convenient and brief description, division into the foregoing function modules is used as an example for illustration. In actual application, the foregoing functions may be allocated to different function modules and implemented according to a requirement. In other words, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in an actual implementation. For example, a plurality of units or components may be combined or integrated into another apparatus, or some features may be ignored or not performed. In addition, the displayed or discussed mutual couplings or direct couplings or communications connections may be implemented by using some interfaces. The indirect couplings or communications connections between the apparatuses or units may be implemented in electronic, mechanical, or other forms.

The units described as separate components may or may not be physically separate, and components displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, each of the units may exist alone physically, or two or more units are integrated into one unit. The integrated unit may be implemented in a form of hardware, or may be implemented in a form of a software functional unit.

Any content of embodiments of this application and any content of a same embodiment may be freely combined. Any combination of the foregoing content shall fall within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Embodiments of this application are described above in conjunction with the accompanying drawings, but this application is not limited to the above specific implementations, and the above specific implementations are only illustrative and not restrictive. Enlightened by this application, a person of ordinary skill in the art can make many forms without departing from the purpose of this application and the protection scope of the claims, all of which fall within the protection of this application.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, and the communication medium includes any medium that enables a computer program to be transmitted from one place to another. The storage medium may be any available medium accessible to a general-purpose or a dedicated computer.

Embodiments of this application are described above in conjunction with the accompanying drawings, but this application is not limited to the above specific implementations, and the above specific implementations are only illustrative and not restrictive. Enlightened by this application, a person of ordinary skill in the art can make many forms without departing from the purpose of this application and the protection scope of the claims, all of which fall within the protection of this application.

**Claims**

1. A data processing method, comprising:

    before an encoder encodes an image rendered by a graphics processing unit, obtaining, by the graphics processing unit, rendering information related to the rendered image; and
    compressing, by the graphics processing unit, the rendering information, and transmitting the compressed rendering information, so that the encoder performs encoding optimization based on the compressed rendering information in a process of encoding the rendered image.

2. The method according to claim 1, wherein the compressing the rendering information comprises:

reducing a resolution of the rendering information; and/or
reducing a bit depth of the rendering information.

3. The method according to claim 2, wherein the reducing a resolution of the rendering information comprises:

obtaining sampling ratio information, wherein the sampling ratio information comprises horizontal sampling ratio information and vertical sampling ratio information; and
performing downsampling on the rendering information in a horizontal dimension and a vertical dimension based on the horizontal sampling ratio information and the vertical sampling ratio information.

4. The method according to claim 3, wherein the obtaining sampling ratio information comprises:

obtaining storage granularity information of the encoder for a motion vector, and determining the sampling ratio information based on the storage granularity information; or
obtaining compensation granularity information required for motion compensation of a decoder, and determining the sampling ratio information based on the compensation granularity information.

5. The method according to claim 2, wherein a value of a bit depth of the rendering information is a first bit depth value; and the reducing a bit depth of the rendering information comprises:

obtaining a second bit depth value, wherein the second bit depth value is less than the first bit depth value; and
converting the bit depth of the rendering information from the first bit depth value to the second bit depth value.

6. The method according to claim 5, wherein the obtaining a second bit depth value comprises:

obtaining a third bit depth value, wherein the third bit depth value is used to represent a bit depth of rendering information required for encoding optimization of the encoder; and
determining the second bit depth value based on the first bit depth value and the third bit depth value.

7. The method according to claim 1, wherein the transmitting the compressed rendering information comprises:

dividing the compressed rendering information into a plurality of information blocks; and
transmitting the information blocks separately.

8. The method according to claim 1, wherein the method further comprises:

dividing the rendering information into a plurality of information blocks;
the compressing the rendering information comprises:

compressing the information blocks separately; and
the transmitting the compressed rendering information comprises:
transmitting the compressed information blocks separately.

9. The method according to claim 7, wherein the dividing the compressed rendering information into a plurality of information blocks comprises:

dividing the compressed rendering information into blocks according to a preset block division manner, to obtain the plurality of information blocks, wherein
the block division manner is a manner in which the encoder divides the rendered image into a plurality of macroblocks.

10. The method according to claim 9, wherein the transmitting the information blocks separately comprises:

determining a transmission sequence of the information blocks according to a preset encoding sequence, wherein the encoding sequence is an encoding sequence set by the encoder for the plurality of macroblocks; and
sequentially transmitting the information blocks according to the transmission sequence corresponding to the information blocks.

11. The method according to claim 1, wherein the transmitting the compressed rendering information comprises:

transmitting the compressed rendering information to the encoder; or
transmitting the compressed rendering information to an analysis module, so that the analysis module performs analysis based on the compressed rendering information, determines encoding optimization information, and transmits the encoding optimization information to the encoder, and the encoder performs encoding optimization based on the encoding optimization information in a process of encoding the rendered image.

12. A data processing method, comprising:

before an encoder encodes an image rendered by a graphics processing unit, obtaining, by the graphics processing unit, rendering information related to the rendered image; and
dividing, by the graphics processing unit, the rendering information into a plurality of information blocks, and transmitting the information blocks separately, so that the encoder performs encoding optimization based on the information blocks in a process of encoding the rendered image.

13. The method according to claim 12, wherein the dividing the rendering information into a plurality of information blocks comprises:

dividing the rendering information into blocks according to a preset block division manner, to obtain the plurality of information blocks, wherein
the block division manner is a manner in which the encoder divides the rendered image into a plurality of macroblocks.

14. The method according to claim 13, wherein the transmitting the information blocks separately comprises:

determining a transmission sequence of the information blocks according to a preset encoding sequence, wherein the encoding sequence is an encoding sequence set by the encoder for the plurality of macroblocks; and
sequentially transmitting the information blocks according to the transmission sequence corresponding to the information blocks.

15. The method according to claim 13 or 14, wherein the transmitting the information blocks separately comprises:

transmitting the information blocks to the encoder separately; or
transmitting the information blocks to an analysis module separately, so that the analysis module analyzes the information blocks, determines encoding optimization information corresponding to each of the information blocks separately, and transmits the encoding optimization information to the encoder, and the encoder performs encoding optimization based on encoding optimization information of a corresponding information block in a process of encoding the macroblocks.

16. A graphics processing unit, configured to perform the data processing method according to any one of claims 1 to 15.

17. A data processing system, comprising a graphics processing unit and an encoder, wherein

the graphics processing unit is configured to: render an image, and obtain rendering information related to the rendered image; and transmit the rendered image to the encoder, compress the rendering information, and transmit the compressed rendering information to the encoder; and
the encoder is configured to: encode the rendered image, and perform encoding optimization based on the compressed rendering information in an encoding process.

18. A data processing system, comprising a graphics processing unit and an encoder, wherein

the graphics processing unit is configured to: render an image, obtain rendering information related to the rendered image, transmit the rendered image to the encoder, divide the rendering information into a plurality of information blocks, and transmit the information blocks to the encoder separately; and
the encoder is configured to: divide the rendered image into a plurality of macroblocks, encode, after receiving an information block, a macroblock corresponding to the received information block, and perform encoding optimization based on the received information block in a process of encoding the macroblock.

19. A data processing system, comprising a graphics processing unit, an analysis module, and an encoder, wherein

the graphics processing unit is configured to: render an image, and obtain rendering information related to a rendered image; and transmit the rendered image to the encoder, compress the rendering information, and transmit compressed rendering information to the analysis module;
the analysis module is configured to: perform analysis based on the compressed rendering information, determine encoding optimization information, and transmit the encoding optimization information to the encoder; and
the encoder is configured to: encode the rendered image, and perform encoding optimization based on the encoding optimization information in an encoding process.

20. A data processing system, comprising a graphics processing unit, an analysis module, and an encoder, wherein

the graphics processing unit is configured to: render an image, obtain rendering information related to the rendered image, transmit the rendered image to the encoder, divide the rendering information into a plurality of information blocks, and transmit the information blocks to the analysis module separately;
the analysis module is configured to: analyze the information blocks, determine encoding optimization information corresponding to each of the information blocks separately, and transmit the encoding optimization information corresponding to each of the information blocks to the encoder; and
the encoder is configured to: divide the rendered image into a plurality of macroblocks, encode, after receiving an information block, a macroblock corresponding to the received information block, and perform encoding optimization based on encoding optimization information of the received information block in a process of encoding the macroblock.

21. An electronic device, comprising:

a memory and a processor, wherein the memory is coupled to the processor; and
the memory stores a program instruction, and when the program instruction is executed by the processor, the processor is enabled to perform the data processing method according to any one of claims 1 to 15.

22. A computer storage medium, wherein the computer readable storage medium stores a computer program, and when the computer program runs on a computer or a processor, the computer or the processor is enabled to perform the data processing method according to any one of claims 1 to 15.

FIG. 1

EP 4 362 469 A1

|  |  |
|---|---|
| Macroblock 1 | Macroblock 2 |
| Macroblock 3 | Macroblock 4 |

Macroblock 4

| 1 | 2 | | |
| 3 | 4 | 7 | 8 |
| 5 | 6 | | |
| 9 | 10 | 13 | |
| 11 | 12 | | 16 |
| 14 | 15 | | |

(1)　　　　　(2)　　　　　(3)

FIG. 2

Compressed
rendering
information

Encoding
optimization
information

| GPU | → | Analysis module | → | Encoder |

FIG. 3

Compressed rendering
information

| GPU | → | Encoder |

FIG. 4

Obtain rendering information _501

Reduce a resolution of the rendering
information _502

Transmit rendering information with a
reduced resolution _503

FIG. 5

FIG. 6

FIG. 7

FIG. 8

901

Obtain rendering information

902

Divide the rendering information into a plurality of information blocks

903

Transmit the information blocks separately

FIG. 9

| C1 | C2 | C3 |
|----|----|----|
| C4 | C5 | C6 |
| C7 | C8 | C9 |

(1)

| R1 | R2 | R3 |
|----|----|----|
| R4 | R5 | R6 |
| R7 | R8 | R9 |

(2)

FIG. 10

FIG. 11

R1 R2 R3 R4 R5 R6 R7 R8 R9

Rendering module

Encoding module

C1 C2 C3 C4 C5 C6 C7 C8 C9

Start transmitting

Rt0

R1

Start encoding

Rt1

R2

R1

Rt1

Encoding ← C1

Rt2

R3

R2

Ct1

Rt3

R4

R3

Encoding ← C2

Rt4

R5

R4

Ct2

Rt5

R6

R5

Encoding ← C3

Ct3

Rt6

R7

R6

Encoding ← C4

Rt7

R8

R7

Ct4

Rt8

R9

R8

Encoding ← C5

Ct5

Rt9

R9

Encoding ← C6

Ct6

Encoding ← C7

Ct7

Encoding ← C8

Ct8

Encoding ← C9

Ct9

FIG. 12

FIG. 13

1401

Obtain first rendering information

1402

Reduce a resolution of the first rendering information to obtain second rendering information

1403

Reduce a bit depth of the second rendering information to obtain third rendering information

1404

Transmit the third rendering information

FIG. 14

EP 4 362 469 A1

FIG. 15

1601

Obtain first rendering information

1602

Reduce a bit depth of the first rendering information to obtain fourth rendering information

1603

Reduce a resolution of the fourth rendering information to obtain third rendering information

1604

Transmit the third rendering information

FIG. 16

FIG. 17

1801

Obtain rendering information

1802

Divide the rendering information into a plurality of information blocks

1803

Compress the information blocks separately

1804

Transmit compressed information blocks separately

FIG. 18

GPU

1901

| 32bit | 32bit | 32bit | 32bit |
|-------|-------|-------|-------|
| 32bit | 32bit | 32bit | 32bit |
| 32bit | 32bit | 32bit | 32bit |
| 32bit | 32bit | 32bit | 32bit |

Block division ⇩

1902

| R1 (32bit) | R2 (32bit) | R3 (32bit) | R4 (32bit) |
|---|---|---|---|

Reduce a resolution ⇩

1903

| R2 (32bit) | R2 (32bit) | R3 (32bit) | R4 (32bit) |
|---|---|---|---|

Reduce a bit depth ⇩

1904

| R2 (16bit) | R2 (16bit) | R3 (16bit) | R4 (16bit) |
|---|---|---|---|

1904

| R4 (16bit) | R3 (16bit) | R2 (16bit) | R1 (16bit) |
|---|---|---|---|

Encoder

1904

| R1 (16bit) | R2 (16bit) | R3 (16bit) | R4 (16bit) |
|---|---|---|---|

FIG. 19

FIG. 20

FIG. 21

GPU

2201

| 32bit | 32bit | 32bit | 32bit |
|-------|-------|-------|-------|
| 32bit | 32bit | 32bit | 32bit |
| 32bit | 32bit | 32bit | 32bit |
| 32bit | 32bit | 32bit | 32bit |

Reduce a
resolution

2202

| 32bit | 32bit |
|-------|-------|
| 32bit | 32bit |

Reduce a bit
depth

2203

| 16bit | 16bit |
|-------|-------|
| 16bit | 16bit |

Block division

2204

| R1<br>(16bit) | R2<br>(16bit) | R3<br>(16bit) | R4<br>(16bit) |
|---------------|---------------|---------------|---------------|

2204

| R4<br>(16bit) | R3<br>(16bit) | R2<br>(16bit) | R1<br>(16bit) |
|---------------|---------------|---------------|---------------|

Encoder

2204

| R1<br>(16bit) | R2<br>(16bit) | R3<br>(16bit) | R4<br>(16bit) |
|---------------|---------------|---------------|---------------|

FIG. 22

**GPU** 2301

| 32bit | 32bit | 32bit | 32bit |
|-------|-------|-------|-------|
| 32bit | 32bit | 32bit | 32bit |
| 32bit | 32bit | 32bit | 32bit |
| 32bit | 32bit | 32bit | 32bit |

Reduce a bit depth

2302

| 16bit | 16bit | 16bit | 16bit |
|-------|-------|-------|-------|
| 16bit | 16bit | 16bit | 16bit |
| 16bit | 16bit | 16bit | 16bit |
| 16bit | 16bit | 16bit | 16bit |

Reduce a resolution

2303

| 16bit | 16bit |
|-------|-------|
| 16bit | 16bit |

Block division

2304

| R1 (16bit) | R2 (16bit) | R3 (16bit) | R4 (16bit) |
|------------|------------|------------|------------|

2304

| R4 (16bit) | R3 (16bit) | R2 (16bit) | R1 (16bit) |
|------------|------------|------------|------------|

**Encoder** 2304

| R1 (16bit) | R2 (16bit) | R3 (16bit) | R4 (16bit) |
|------------|------------|------------|------------|

FIG. 23

2400

2401

Processor

2403

2404

Memory

2402

Transceiver/Transceiver pin

FIG. 24

## INTERNATIONAL SEARCH REPORT

| International application No. |
|---|
| **PCT/CN2022/100496** |

| **A.** | **CLASSIFICATION OF SUBJECT MATTER** |
|---|---|

H04N 19/85(2014.01)i

According to International Patent Classification (IPC) or to both national classification and IPC

| **B.** | **FIELDS SEARCHED** |
|---|---|

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 渲染, 降低, 压缩, 分辨率, 运动矢量, 图形处理, 编码, 优化, 比特, 深度, 渲染信息, 传输, 时延, 带宽, GPU, MV, RMV, motion vector, render+, frame, compress+, encoding

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 109391815 A (INTEL CORP.) 26 February 2019 (2019-02-26) description, paragraphs [0022]-[0168], and figures 1 and 2 | 1-22 |
| A | CN 101309411 A (ZHEJIANG UNIVERSITY) 19 November 2008 (2008-11-19) entire document | 1-22 |
| A | CN 110322526 A (WUHAN MAKER SCI-TECH CO., LTD.) 11 October 2019 (2019-10-11) entire document | 1-22 |
| A | CN 111583350 A (LENOVO (BEIJING) LIMITED) 25 August 2020 (2020-08-25) entire document | 1-22 |
| A | CN 104125472 A (NVIDIA CORP.) 29 October 2014 (2014-10-29) entire document | 1-22 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 September 2022** | **15 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/100496**

| Patent document cited in search report | | | Publication date (day/month/year) | Patent family member(s) | | | Publication date (day/month/year) |
|---|---|---|---|---|---|---|---|
| CN | 109391815 | A | 26 February 2019 | None | | | |
| CN | 101309411 | A | 19 November 2008 | CN | 100563339 | C | 25 November 2009 |
| CN | 110322526 | A | 11 October 2019 | None | | | |
| CN | 111583350 | A | 25 August 2020 | None | | | |
| CN | 104125472 | A | 29 October 2014 | None | | | |

Form PCT/ISA/210 (patent family annex) (January 2015)

**REFERENCES CITED IN THE DESCRIPTION**

**Patent documents cited in the description**

- CN 202110786721X